(19) Europäisches Patentamt
European Patent Office
Office européen des brevets

(11) EP 1 994 217 B1

(12) **FASCICULE DE BREVET EUROPEEN**

(45) Date de publication et mention de la délivrance du brevet:
**11.04.2012 Bulletin 2012/15**

(21) Numéro de dépôt: **07731010.0**

(22) Date de dépôt: **19.02.2007**

(51) Int Cl.:
***D06M 23/12*** *(2006.01)* ***B01J 13/16*** *(2006.01)*
***B01J 13/20*** *(2006.01)* ***C08J 7/12*** *(2006.01)*
***D01F 11/14*** *(2006.01)*

(86) Numéro de dépôt international:
**PCT/FR2007/000299**

(87) Numéro de publication internationale:
**WO 2007/096513 (30.08.2007 Gazette 2007/35)**

(54) **CAPSULES A SURFACE MODIFIEE POUR GREFFAGE SUR FIBRES**

KAPSELN MIT MODIFIZIERTER OBERFLÄCHE ZUM PFROPFEN AUF FASERN

CAPSULES WITH A MODIFIED SURFACE FOR GRAFTING ONTO FIBRES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.02.2006 FR 0601467**

(43) Date de publication de la demande:
**26.11.2008 Bulletin 2008/48**

(73) Titulaire: **Centre National de la Recherche Scientifique**
**75016 Paris (FR)**

(72) Inventeurs:
- **FRERE, Yves**
  **F-67810 Holtzheim (FR)**
- **DANICHER, Louis**
  **F-67200 Strasbourg (FR)**
- **MERJI, Mahdi**
  **4000 Sousse (TN)**

(74) Mandataire: **Domenego, Bertrand**
**Cabinet Lavoix**
**2, place d'Estienne d'Orves**
**75441 Paris Cedex 09 (FR)**

(56) Documents cités:
**EP-A- 1 398 074**
**WO-A-01/06054**
**WO-A-03/097228**
**WO-A-2006/013165**
**US-A1- 2003 013 369**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 994 217 B1

## Description

La présente invention concerne un procédé de greffage, par liaison de covalence, de capsules composites creuses ou pleines sur tout type de support naturel, artificiel ou synthétique, organique ou inorganique, lesdites capsules étant modifiées chimiquement, physiquement ou physico-chimiquement afin d'améliorer éventuellement leur affinité avec ledit support et de les fonctionnaliser, puis greffées, après activation desdites capsules et/ou dudit support.

L'invention concerne également les capsules ainsi modifiées, les supports greffés par lesdites capsules, notamment des fibres et des textiles, ainsi que l'utilisation de ces supports greffés, notamment fibres et textiles, pour l'élaboration d'articles dits "de fonction".

Plus particulièrement, la présente invention concerne un procédé de greffage de capsules composites à membrane polymère comprenant éventuellement une ou plusieurs substances actives, sur tout type de support, notamment des fibres, telles que fibres textiles, fibres de verre, de papier, de bois, et autres. L'invention concerne également les capsules composites modifiées aptes à être greffées sur lesdits supports, ainsi que les supports greffés par ces capsules et les articles réalisés avec lesdits supports greffés.

L'industrie textile connaît de nos jours un essor particulier dans le domaine des vêtements dits "de fonction". Ces vêtements sont constitués principalement de fibres textiles, naturelles, artificielles ou synthétiques, comprenant divers principes actifs et permettant par exemple aux vêtements d'emmagasiner et de restituer la chaleur, de libérer plus ou moins rapidement dés parfums, des agents hydratants, des agents thérapeutiques, ou encore de piéger ou retenir divers composés organiques ou inorganiques venant au contact des fibres, etc.

Généralement, les principes actifs sont encapsulés dans des microcapsules qui sont fixées ou associées aux fibres de diverses manières, par exemple par inclusion, enduction, ou encore par liaisons ioniques. Ces microcapsules peuvent être sensibles, par exemple, à la chaleur corporelle et/ou à l'environnement extérieur influençant ainsi la libération de diverses molécules.

Dans le mode de fixation par inclusion, les capsules sont emprisonnées directement au coeur de la fibre. L'avantage de cette technique est que les capsules sont fixées de manière permanente dans la fibre. L'inconvénient cependant est que ce procédé ne peut être mis en oeuvre que pour des fibres synthétiques filées par extrusion à basse température. En outre, le principe actif encapsulé est difficilement accessible ou diffuse difficilement au travers de la membrane de la capsule et au travers de la fibre jusqu'à la surface de celle-ci.

C'est pourquoi, la fixation de capsules sur tout type de fibre, et en particulier sur fibres naturelles, fait aujourd'hui généralement appel à la technique d'enduction. Les capsules sont dispersées dans un polymère réticulé qui est enduit sur les fibres. Ici encore, la fixation des capsules est permanente, et le procédé est d'une mise en oeuvre aisée. Cependant les fibres, ainsi enduites par le polymère réticulé et dans lequel sont dispersées les capsules, sont moins agréables au toucher.

En outre, dans le cas précédent, le principe actif encapsulé est difficilement accessible, ou diffuse difficilement au travers de la membrane de la capsule et au travers du vernis d'enduction.

Une autre technique encore fait appel à la fixation des capsules par liaisons ioniques sur les fibres. Cette technique utilise le fait que les fibres possèdent généralement un potentiel de surface. Des capsules sont synthétisées de manière à présenter des fonctions cationiques ou anioniques sur la surface externe de la membrane et sont fixées par liaisons ioniques sur les fibres. Ici encore, un avantage est une mise en oeuvre très simple du procédé. L'inconvénient majeur est la très mauvaise tenue au mouillé. Après quelques lavages, la quasi totalité des capsules ont disparu de la surface des fibres.

Des techniques plus récentes utilisent les méthodes connues de greffage de colorants sur les fibres textiles, c'est-à-dire un greffage par liaisons de covalence. Ainsi, par exemple, la demande de brevet WO 01/06054 divulgue une matière active contenue dans une capsule polymère, dont la surface présente des groupements réactifs permettant ladite liaison de covalence avec la fibre par l'intermédiaire d'un liant.

Toutefois, la description de cette technique reste très générale, et les exemples concernent uniquement des fibres de coton, sur lesquelles sont greffées des capsules renfermant une matière active, lesdites capsules étant liées aux fibres de coton par l'intermédiaire d'un « pont » apporté par une résine possédant des groupements méthylol.

Dans ces exemples, la liaison de covalence est créée entre deux groupements hydroxyle (-OH) avec élimination d'une molécule d'eau, en présence d'un catalyseur de type acide de Lewis.

Ce procédé souffre de nombreux inconvénients, dont notamment celui de générer de l'eau, en tant que sous-produit, et de nécessiter l'emploi d'un catalyseur. En outre, la résine à groupements méthylol est une résine de type urée. Ces groupements peuvent inter-réagir de manière non désirée avec les capsules polymères, notamment en formant des agglomérats de capsules nuisibles à une bonne répartition des capsules sur les fibres.

La demanderesse a maintenant découvert un procédé permettant le greffage de capsules composites, pleines ou creuses, sur des fibres, notamment des fibres textiles, ledit procédé étant également adapté au greffage desdites capsules sur tout type de support, présentant directement, ou sous forme latente, ou encore après pré-traitement, des groupements fonctionnels aptes à former des liaisons de covalences avec lesdites capsules.

La présente invention propose par conséquent un procédé de greffage par liaisons de covalence de capsules polymères, creuses ou pleines, renfermant éventuellement une matière active, sur tout type de support, notamment des fibres, en particulier des fibres textiles, lequel procédé ne présente pas les inconvénients des procédés connus de l'art antérieur.

Le procédé de la présente invention permet entre autres de répondre au besoin de disposer de fibres textiles "de fonction", notamment capables d'emmagasiner et de restituer la chaleur, de libérer plus ou moins rapidement des parfums, des agents hydratants, des agents thérapeutiques, ou encore de piéger ou retenir divers composés organiques ou inorganiques venant au contact des fibres, tout en ne présentant pas les inconvénients connus de l'art antérieur.

Ainsi, un premier objectif de la présente invention consiste à fournir un procédé de greffage de capsules polymères creuses ou pleines, renfermant éventuellement au moins un principe actif, sur un support, naturel, artificiel ou synthétique, organique ou inorganique, le greffage desdites capsules présentant une résistance améliorée par rapport aux techniques de fixation existantes.

Un objectif de l'invention consiste également à fournir un procédé de greffage de capsules polymères composites creuses, renfermant éventuellement au moins un principe actif liposoluble ou hydrosoluble, sur un support, naturel, artificiel ou synthétique, organique ou inorganique, par l'intermédiaire d'une liaison chimique forte, et de manière définitive.

Un autre objectif de l'invention consiste à fournir un procédé de greffage de capsules polymères composites creuses ou pleines, renfermant éventuellement au moins un principe actif liposoluble ou hydrosoluble, sur un support, naturel, artificiel ou synthétique, organique ou inorganique, tout en respectant la qualité intrinsèque dudit support.

La présente invention a également pour but de fournir un procédé de greffage de capsules polymères composites creuses ou pleines, renfermant éventuellement au moins un principe actif liposoluble ou hydrosoluble, sur un support, naturel, artificiel ou synthétique, organique ou inorganique, dont les qualités, notamment au toucher, ne sont substantiellement pas modifiées.

Corollairement, la présente invention a pour but de fournir un procédé de greffage de capsules polymères composites creuses ou pleines, renfermant éventuellement au moins un principe actif liposoluble ou hydrosoluble, sur un support, naturel, artificiel ou synthétique, organique ou inorganique, notamment des fibres, naturelles, artificielles ou synthétiques, organiques ou inorganiques, sans utiliser d'agent d'enrobage sur ledit support ou lesdites fibres.

Un autre but encore de l'invention consiste à fournir un procédé de greffage de capsules polymères composites creuses ou pleines, renfermant éventuellement au moins un principe actif liposoluble ou hydrosoluble, sur un support, naturel, artificiel ou synthétique, organique ou inorganique, notamment des fibres, lesdites capsules étant greffées sur ledit support ou lesdites fibres, de manière homogène et contrôlée.

D'autres objectifs encore apparaîtront clairement à la lecture de la description de l'invention qui suit. Il a maintenant été découvert que ces buts peuvent être atteints, en totalité ou en partie, grâce au procédé de greffage selon la présente invention.

Au sens de la présente invention, et comme indiqué ci-dessus, le terme « support » désigne tout substrat, présentant directement, ou sous forme latente, ou après pré-traitement, ou encore après activation, des groupements fonctionnels aptes à former des liaisons de covalences avec lesdites capsules.

Des exemples de groupements fonctionnels, ou encore groupements réactifs seront décrits dans la suite du présent exposé et comprennent tout type de groupement réactif chimique connu dans le domaine de la chimie, comme étant susceptible de former, avec d'autres groupements, des liaisons chimiques stables, de type liaison de covalence. De tels groupements sont, de manière non limitative, les groupements hydroxy, thiol, époxy, carboxy, halogéno, amino, amido, oxo, thioxo, cyano, insaturation éthylénique ou acétylénique, et autres.

Les groupements peuvent être directement présents sur le support, ou bien encore sous forme latente et peuvent être rendus actifs (étape d'activation) au moyen d'un ou plusieurs traitements chimiques, physiques ou physico-chimiques, connus de l'homme du métier. Le support selon l'invention peut également ne pas présenter, ou peut présenter une quantité insuffisante, de groupements réactifs. Dans ces cas, un prétraitement, également connu dans le domaine, tel que, et de manière non limitative, un traitement au plasma ou un traitement corona, est effectué afin de faire apparaître, ou de multiplier, les groupements réactifs sur le support.

Les supports convenables au sens de l'invention sont avantageusement, et de manière non limitative, le bois, le papier, la pierre, et les minéraux en général, le verre, les végétaux, le cuir, la peau, les polymères et matières plastiques en général, et autres. Les supports composites comprenant deux ou plusieurs de ces supports sont également compris dans la présente invention.

Le support utilisable dans le procédé selon la présente invention peut se présenter sous forme brute, ou encore sous tout type de forme, et en particulier sous forme de film, revêtement, peinture, vernis, feuille, plaque, fibre, fils, et autres.

Un support tout particulièrement préféré pour le procédé selon l'invention est un support sous forme de fibres, notamment fibres textiles, fibres de bois, de verre, de carbone, et en particulier fibres textiles.

Il convient de rappeler que l'on entend par fibre tout objet dont la longueur est très supérieure, de l'ordre de

quelques centaines à 1000 fois ou plus supérieure, à sa section. La section d'une fibre peut être de toute forme, ronde, dentelée ou cannelée, ou encore en forme de haricot, mais aussi multilobée, en particulier trilobée ou pentalobée, en forme de X, de ruban, creuse, carrée, triangulaire, elliptique, ou autre.

Par "fibre inorganique", on entend une fibre d'origine minérale, comme par exemple la fibre de verre, la fibre de carbone, etc. À l'inverse, le terme "fibre organique" comprend toute fibre qui n'est pas d'origine minérale.

Une fibre naturelle est par définition une fibre naturellement présente dans la nature, directement ou après traitement mécanique et/ou physique. On regroupe dans cette catégorie les fibres d'origine végétale, par exemple coton, lin, bois, chanvre, rami, jute, et celles d'origine animale comme laine, soie, angora, etc.

Les fibres artificielles sont quant à elles issues de fibres naturelles auxquelles on a fait subir un ou plusieurs traitements chimiques afin d'en améliorer notamment les propriétés mécaniques et/ou physico-chimiques. Ainsi, les fibres cellulosiques sont obtenues par régénération ou modification de la cellulose, et sont par exemple les fibres connues sous le nom de viscose, acétate, triacétate, etc.

Les fibres synthétiques regroupent les fibres obtenues par synthèse chimique et sont en général des fibres constituées d'un ou plusieurs polymères et/ou copolymères, mono- ou multi-composants (par exemple de type coeur-peau), qui sont généralement extrudés et/ou étirés jusqu'au diamètre désiré de la fibre. À titre d'exemple, on peut citer comme fibres synthétiques le polyester, le polyamide dont un représentant très connu est le nylon, le poly(chlorure de vinyle), le polyéthylène, le polypropylène, etc.

Les fibres sont essentiellement caractérisées par leur longueur. Celles-ci peuvent être courtes (coton par exemple) ou longues (laine) ou encore se présenter sous la forme de filaments, comme la soie. Plutôt que de parler de diamètre des fibres, il est d'usage, dans le domaine des fibres textiles, de les caractériser par leur titre. L'unité de titre la plus répandue est le tex, et ses sous-multiples, comme le décitex (ou dtex) ou le millitex (mtex). Une fibre qui titre 1 tex est une fibre de 1 mètre de longueur dont le poids est égal à 1 milligramme (1 tex = 1 $mg.m^{-1}$).

La présente invention concerne donc un procédé de greffage de capsules composites polymères creuses ou pleines, sur tout type de support, notamment sur des fibres, en particulier des fibres textiles, telles qu'elles viennent d'être définies.

Par "capsule composite", on entend tout type de particule individualisée constituée par une partie polymère et une partie « principe actif » (ou « matière, ou substance active »). Par « capsule composite creuse », on entend une particule constituée d'une membrane de polymère solide continue enveloppant un ou plusieurs coeurs contenant éventuellement un ou plusieurs principes actifs (c'est-à-dire un produit encapsulé). Par « capsule composite pleine », on entend une particule constituée d'un matériau polymère continu dans lequel sont dispersés un ou plusieurs principes actifs. Les capsules composites se comportent comme des réservoirs et permettent l'isolation ou la rétention ou la libération du ou desdits principes actifs. Ces particules présentent généralement des tailles comprises entre quelques nanomètres et quelques millimètres.

La capsule est généralement constituée d'une membrane dont le rôle est, d'une part, d'isoler la substance active du milieu extérieur, et d'autre part, de permettre une meilleure conservation de la dite substance active, voire une vectorisation et/ou une libération immédiate, prolongée, retardée et/ou contrôlée de la substance active encapsulée dans les usages classiques qui sont faits des produits encapsulés. Le principe actif peut également servir à « piéger » des molécules extérieures à la capsule qui ont traversé la membrane ou qui ont diffusé au travers de la membrane.

Le terme "produit encapsulé" indique qu'un produit est enfermé, à l'état solide ou liquide, voire gazeux, seul ou en combinaison avec des agents de formulation, dans un corps creux, ou dans un milieu continu, la capsule, afin de l'isoler du milieu extérieur.

Il existe de nombreux procédés de préparation de capsules, et parmi ceux-ci, on peut citer notamment la synthèse de capsules par coacervation simple ou complexe, ou par fusion ou gélification du matériau support (spray coating). D'autres techniques font appel à la polymérisation en émulsion ou en dispersion ou en suspension, à la synthèse de particules pleines, à la synthèse de vésicules, ou encore à la synthèse de capsules par lit fluidisé, par enrobage, par exemple en lit d'air fluidisé.

Un autre procédé fait appel à la technique de polycondensation interfaciale en milieu dispersé, technique divulguée, par exemple par P. W. Morgan et coll., *J. Polym. Sci.,* **40**, (1959), 299-327, pour la synthèse de films plans. Cette technique a été adaptée à la synthèse de capsules (R. Arshady, *J. Microencap.,* **6**(1), (1989), 1-10 et 13-28).

Tous les types de capsules composites ainsi définies par leur mode d'obtention peuvent convenir, étant entendu que la surface de la capsule présente ou peut présenter, après traitement chimique, physique ou physico-chimique, au moins un groupement réactif susceptible de se lier, directement ou par l'intermédiaire d'un ou plusieurs autres groupements réactifs, à au moins un groupement réactif présent sur la fibre.

Les polymères constitutifs des membranes des capsules sont avantageusement choisis parmi les polymères courants, comme par exemple, les polyesters, les polyamides, les polyuréthannes ou encore les polymères naturels d'origines végétale ou marine.

Par exemple, la préparation des capsules par polycondensation interfaciale en milieu dispersé conduit à des capsules particulièrement adaptées au greffage sur fibres selon la présente invention. En effet, les capsules préparées

selon cette méthode offrent notamment l'avantage de proposer une très grande diversité de nature de polymère constitutif de la membrane, et par voie de conséquence une très grande diversité de groupements réactifs susceptibles de former des liaisons de covalence avec les groupements réactifs présents sur les fibres.

Il est en effet possible d'obtenir par polycondensation interfaciale en milieu dispersé, des capsules à membrane polyamide, polyester, polyurée, pulyuréthanne, poly(éther-uréthanne), poly(éther-uréthanne-urée), et autres. Chacun de ces polymères procure à la membrane qui en est constituée au moins un groupement réactif requis pour l'établissement d'un liaison covalente avec la fibre.

Les capsules composites obtenues par polycondensation interfaciale en milieu dispersé possèdent une tenue mécanique particulièrement adaptée aux applications envisagées dans le cadre de la présente invention. Les membranes des capsules obtenues selon ce procédé offrent également un degré de porosité optimal pour lesdites applications.

Un autre avantage encore des capsules obtenues par polycondensation interfaciale en milieu dispersé est qu'il est possible d'obtenir des capsules biocompatibles, c'est-à-dire parfaitement biotolérées et non toxiques pour l'homme, les animaux, les végétaux et pour le milieu vivant en général. Ceci est particulièrement important lors de l'utilisation de fibres greffées par des capsules composites pour la préparation d'étoffes et de vêtements appelés à venir au contact de tissus vivants, tel que l'épiderme humain, afin d'éviter les problèmes d'allergies ou de toxicité. Le procédé d'obtention de telles capsules composites biocompatibles est décrit plus en détail dans la demande de brevet FR-A-2 837 724.

La synthèse de capsules par polycondensation interfaciale en milieu dispersé permet également l'encapsulation de quasiment toutes matières actives, lipophiles ou lipophobes, selon le type de dispersion retenu. Selon le degré de porosité de la membrane et la formulation de la substance active encapsulée, il est ainsi possible d'obtenir des capsules largantes (le largage du principe actif est obtenu par rupture de la membrane), des capsules diffusantes (diffusion du principe actif à travers la membrane) et des capsules à changement de phase permettant le stockage et la restitution d'énergie sous forme de chaleur, grâce au changement de phase du principe actif.

Il a été en outre découvert récemment qu'il était possible de préparer, par polycondensation interfaciale, des capsules renfermant une substance active complexante, comme des éthers-couronne. De telles capsules « pièges » et leur procédé de préparation sont décrits en détail dans la demande de brevet FR-A-2 838 655.

L'ensemble des avantages exposés ci-dessus, et la grande souplesse des conditions opératoires et de choix des matières premières, font que les capsules composites obtenues par polycondensation interfaciale en milieu dispersé sont de préférence employées dans le procédé de greffage de la présente invention. Tout autre type de capsule peut bien entendu convenir, avec toutefois les conditions précédemment définies et relatives à la présence de groupements réactifs à la surface des membranes desdites capsules, ces groupements pouvant être initialement présents ou révélés voire créés par un ou plusieurs traitements chimiques, physiques ou physico-chimiques.

Le diamètre des capsules qui peuvent être greffées sur les fibres peut varier dans de très larges proportions et est généralement compris entre quelques nanomètres et quelques millimètres. Cependant, et afin, par exemple, de conserver à la fibre ses qualités notamment au toucher, les capsules mises en oeuvre dans le procédé de l'invention possèdent de préférence un diamètre compris entre environ 0,05 μm et environ 100 μm, avantageusement compris entre environ 0,1 μm et environ 10 μm, de manière particulièrement préférée entre environ 0,5 μm et environ 5 μm et de manière particulièrement préférée un diamètre de l'ordre de 1 μm.

Il convient de noter que la taille des capsules doit être adaptée à la taille des fibres, des fibres de diamètre important pouvant supporter des capsules relativement volumineuses, alors que des fibres fines, par exemple des microfibres, seront de préférence greffées par des capsules dont le diamètre est inférieur au micromètre (μm), voire très inférieur au micromètre.

Par exemple, pour des capsules de diamètre d'environ 1 μm, le titre de la fibre sera avantageusement compris entre environ 1 dtex et environ 7 dtex, c'est-à-dire d'un diamètre, selon la nature de la fibre considérée, compris entre environ 10 μm et 30 μm. Dans le cas de microfibres, le diamètre des capsules sera de préférence inférieur à 1 μm.

Quelle que soit la taille des capsules et des fibres, et quelle que soit la nature des capsules et des fibres, le procédé de greffage fait toujours intervenir des liaisons covalentes entre les capsules et les fibres.

Ainsi, la présente invention concerne un procédé de greffage de capsules composites creuses ou pleines, sur un support, ledit procédé comprenant les étapes de :

a) préparation éventuelle des capsules pour adaptation du caractère lipophile/hydrophile de la surface de la capsule en fonction de la nature du support ;
b) fonctionnalisation de la surface des capsules ;
c) activation des capsules fonctionnalisées et/ou du support par greffage de groupes réactifs aptes à former des liaisons de covalence avec les groupements réactifs présents à la surface du support et/ou des capsules fonctionnalisées respectivement ;
d) mise en contact des capsules fonctionnalisées et éventuellement activées avec le support éventuellement activé et création de liaisons de covalence entre lesdites capsules ledit support ; et

e) récupération et rinçage du support comportant des capsules composites greffées par liaisons de covalence.

Il doit être compris que les étapes a) et b) peuvent être effectuées en ordre inverse, c'est-à-dire l'étape b) avant l'étape a). Il est ainsi possible de fonctionnaliser la surface de la capsule, puis de modifier éventuellement le caractère hydrophile/lipophile de la surface de la capsule pour l'adapter à celui du support.

Le terme « adapter » au sens de la présente invention signifie modifier le caractère lipophile/hydrophile de la membrane de la capsule pour le rendre sensiblement identique au caractère lipophile/hydrophile du support. Le but de cette opération est de rendre les capsules compatibles avec le support, et permet de réduire, voire d'éviter, la formation d'agrégats de capsules, c'est-à-dire d'obtenir une répartition substantiellement homogène, et de manière contrôlée, des capsules sur le support.

Par exemple, dans le cas d'un greffage de capsules polyamide sur des fibres de coton, il peut être avantageux de modifier les capsules pour leur conférer un caractère hydrophile sensiblement égal à celui du coton. Cette modification peut par exemple être réalisée par greffage de fonctions hydrophiles, telles que des groupements hydroxy (-OH), sur la surface des membranes des capsules.

Tout autre type de moyen, connu de l'homme du métier, permettant de modifier le caractère lipophile/hydrophile de la surface des capsules convient dans le cadre du procédé de la présente invention. À titre d'exemple, et de manière non limitative, il est possible de réaliser un traitement ionique, ou de greffer des groupements poly(éthylèneglycol) ou poly(propylèneglycol), afin d'augmenter le caractère hydrophile ; on peut également procéder à une alkylation de groupements hydroxyle, ou à un greffage de groupements oléfiniques, aromatiques et autres, pour augmenter le caractère lipophile.

L'étape b) de fonctionnalisation de la surface des capsules consiste à « homogénéiser » les groupements réactifs à la surface de la capsule et/ou améliorer leur disponibilité et/ou augmenter leur nombre.

Par « homogénéisation », on entend un traitement chimique, physique, ou physico-chimique, permettant l'obtention de groupements réactifs à la surface des capsules substantiellement identiques entre eux.

Par exemple, la synthèse de capsules à membrane polyamide par polycondensation interfaciale en phase inverse conduit à la présence de groupements réactifs, disponibles à la surface de la membrane, de type amine, ammonium, acide carboxylique, carboxylate et chlorure d'acyle. L'action d'un composé de type diamine permet de transformer les groupements porteurs d'une fonction carboxylique en fonctions amine, et un ajustement de la valeur du pH permet de convertir les fonctions ammonium en fonctions amine, comme indiqué sur le schéma suivant dans lequel R représente un radical bivalent :

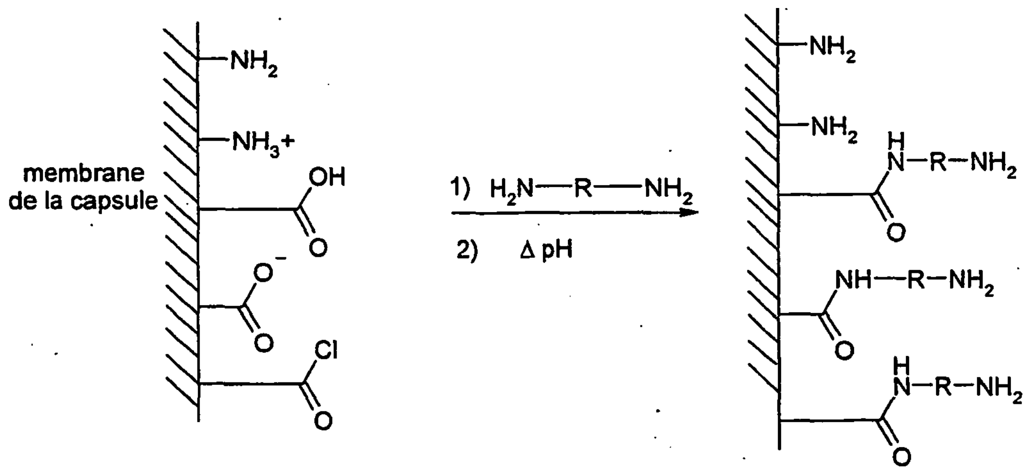


Ainsi, la surface de la capsule ne présente alors que des groupements réactifs de type amine, ce qui permet une optimisation et un meilleur contrôle de la réaction ultérieure de greffage sur le support, avec la molécule d'activation. En effet, les groupements fonctionnels, tous identiques, ne font appel qu'à un seul type de réaction pour la formation de la liaison de covalence entre la capsule et le groupe d'activation. Les groupements réactifs de type amine sont également plus nombreux (comme on le voit sur le schéma ci-dessus), autorisant ainsi un plus grand nombre de liaisons de covalence.

Il n'est cependant pas obligatoire que tous les groupements fonctionnels, après fonctionnalisation, soient nécessairement identiques, mais il est préférable qu'ils puissent intervenir dans la formation d'une liaison de covalence, par exemple avec le groupe d'activation, selon une réaction chimique, de préférence unique, de cinétique rapide et irréversible.

Comme indiqué ci-dessus, la fonctionnalisation peut être effectuée par exemple en modifiant le pH, et/ou par greffage de composés, généralement présentant au moins deux groupements réactifs, l'un des groupements permettant une liaison de covalence avec les groupements réactifs présents à la surface des capsules, l'autre groupement réactif restant inchangé dans cette étape et étant susceptible d'être mis en oeuvre dans la formation de la liaison de covalence avec le support, via le groupe d'activation.

Les traitements chimiques, physiques et physico-chimiques impliqués dans le traitement de fonctionnalisation susmentionné sont de tout type et parfaitement connus de l'homme du métier, et sont par exemple des procédés de greffage par liaison de covalence, des ajustements de pH etc.

À titre d'exemple, et de manière non limitative de tels composés présentant au moins deux groupements réactifs, et qui sont plus particulièrement appropriés dans le cas de capsules à membrane polyamide obtenues par polycondensation interfaciale en phase inverse, on peut citer les diamines, les triamines, les tétramines et les polyamines en général, en particulier les $\alpha,\omega$-diamines, y compris les poly(oxyalkylène)amines.

Sans vouloir apporter un quelconque caractère limitatif, les amines décrites ci-dessus sont, selon un mode de réalisation préférée de la présente invention, choisies parmi l'éthylènediamine, la di-éthylènetriamine, la tri-éthylène-tétramine, la tétra-éthylènepentamine, la tris-amino-éthylamine, les poly(éthylène)-imines linéaires, les poly(éthylène) imines branchées et les poly(oxyalkylène)-amines, en particulier celles connues sous le nom commercial Jeffamine® distribuée par la société Hunstman, plus particulièrement celles des séries ED, EDR, D et T, et notamment la Jeffamine® EDR-148, la Jeffamine® D-230 ou encore la Jeffamine® T-403.

Toutes ces amines permettent une fonctionnalisation homogène des surfaces des membranes des capsules, les capsules issues de l'étape b) du procédé selon la présente invention, présentent dans ce cas des groupements fonctionnels $-NH_2$, substantiellement tous identiques.

Les capsules fonctionnalisées telles que décrites ci-dessus, notamment fonctionnalisées par des groupes amines, en particulier les capsules à membrane polyamide obtenues par polycondensation interfaciale en phase inverse fonctionnalisées par des groupements amines, font partie intégrante de la présente invention.

Selon un mode de réalisation particulièrement avantageux du procédé de la présente invention, les étapes a) et b) peuvent être réalisées de manière simultanée, en une seule étape. Il est également possible de réaliser l'adaptation lipophile/hydrophile décrite ci-dessus au moyen du ou des composés utilisés pour le traitement décrit *supra* d'homogénéisation des groupements réactifs à la surface de la membrane des capsules.

Ainsi, et selon un mode de réalisation avantageux, la présente invention concerne un procédé de greffage de capsules composites creuses ou pleines, sur un support, ledit procédé comprenant les étapes de :

a') adaptation du caractère lipophile/hydrophile de la capsule en fonction de la nature du support, et fonctionnalisation simultanée de ladite surface ;
b') activation des capsules fonctionnalisées et/ou du support par greffage de groupes réactifs aptes à former des liaisons de covalence avec les groupements réactifs présents à la surface du support et/ou des capsules fonctionnalisées respectivement ;
c') mise en contact des capsules éventuellement activées avec le support éventuellement activé et création de liaisons de covalence entre les groupes réactifs desdites capsules et les groupes réactifs dudit support ; et d') récupération et rinçage du support comportant des capsules composites greffées par liaisons de covalence.

En particulier, le greffage de composés de la famille des poly(oxyalkylène)amines à la surface de capsules composites polyamide, obtenues par polycondensation interfaciale en phase inverse, non seulement confère auxdites capsules un caractère hydrophile compatible avec celui de fibres de coton, mais aussi permet une fonctionnalisation homogène des groupements réactifs, en l'espèce des groupements amino ($-NH_2$), à la surface desdites capsules.

Des résultats tout à fait satisfaisants ont été obtenus par greffage sur des capsules composites creuses polyamide, obtenues par polycondensation interfaciale en phase inverse, de Jeffamine® D-230 ou de Jeffamine® EDR-148 qui répondent aux formules suivantes :

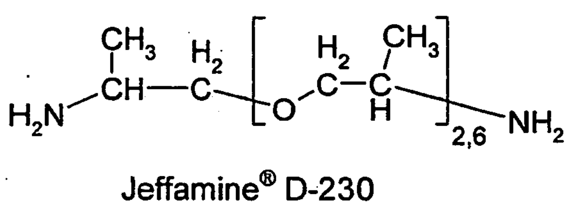
Jeffamine® D-230

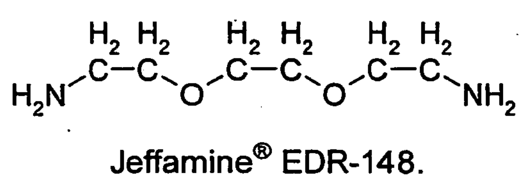
Jeffamine® EDR-148.

Les capsules fonctionnalisées telles que définies ci-dessus font également partie de la présente invention. À

titre d'exemple, la Figure 1 représente schématiquement une capsule polyamide fonctionnalisée par une amine de formule $H_2N$-R-$NH_2$, où R représente le résidu du composé de fonctionnalisation. La Figure 2 est une représentation schématique de la capsule fonctionnalisée de la Figure 1 où le composé de fonctionnalisation est la Jeffamine® EDR-148.

L'étape c) (ou b')) du procédé selon la présente invention est l'étape d'activation des surfaces des capsules qui ont été fonctionnalisées, et dont le caractère lipophile/hydrophile a été éventuellement adapté à celui du support devant être greffé par lesdites capsules. Selon une variante, l'activation peut être réalisée sur le support lui-même, ou bien encore à la fois sur le support et sur les capsules.

Lors de cette étape d'activation, les groupements fonctionnels présents à la surface des capsules, et/ou du support, sont remplacés et/ou modifiés par un traitement chimique, physique ou physico-chimique, de manière à observer, à la surface des capsules, et/ou du support, des groupements réactifs aptes à former des liaisons de covalence avec les groupements réactifs présents sur le support, et/ou les capsules respectivement, la réaction de formation des liaisons de covalence étant de préférence une réaction totale, irréversible, de cinétique rapide, et avantageusement ne nécessitant pas l'action d'un catalyseur.

Les réactions de création de liaison de covalence seront en outre avantageusement des réactions qui ont lieu à pression atmosphérique et à des températures comprises entre -10°C et 100°C, préférentiellement au voisinage de la température ambiante.

On préfère ainsi disposer de capsules présentant sur leur surface des groupements réactifs aptes, à former des liaisons de covalence avec le support, avantageusement une fibre, de préférence une fibre textile, par réactions chimiques totales, non réversibles et avec une cinétique relativement rapide. On pourra à ce sujet se référer avantageusement aux ouvrages classiques de chimie organique traitant des fonctions chimiques capables de réagir entre elles pour former des liaisons covalentes.

Les liaisons de covalence évoquées dans la présente invention peuvent être de tout type connu de l'homme du métier, spécialisé dans le domaine de la chimie organique, et sont définies notamment par J. March, "Advanced Organic Chemistry", 3rd edition, pp. 3-9.

De manière non limitative et à titre d'illustration, le tableau suivant fournit quelques exemples de liaisons de covalence, comprises dans le cadre de la présente invention, résultant de l'interaction entre un groupement réactif A et un groupement réactif B, de tels groupements A et B pouvant être présents indifféremment sur le support ou à la surface de la capsule :

| *Groupement réactif A* | *Groupement réactif B* | *Liaison covalente résultante* |
|---|---|---|
| acide carboxylique | hydroxy (-OH) | Ester |
| halogénure d'acyle | amine (-$NH_2$) | Amide |
| halogénure | hydroxy (-OH) | Éther |
| isocyanate | amine (-$NH_2$) | Urée |
| isocyanate | hydroxy (-OH) | Uréthanne |

L'activation des capsules fonctionnalisées et/ou du support peut par exemple être réalisée par greffage, sur les groupements fonctionnels présents à la surface des capsules et/ou du support, de composés (groupes d'activation) présentant au moins un groupement réactif apte à former une liaison de covalence avec les groupements réactifs présents sur le support et/ou des capsules respectivement, ladite réaction étant de préférence totale, irréversible et de cinétique relativement rapide.

Les composés permettant l'activation des capsules fonctionnalisées et/ou du support peuvent être de tout type connus de l'homme du métier, comprenant au moins deux groupements réactifs, l'un avec les groupements fonctionnels présents à la surface des capsules, l'autre avec les groupements fonctionnels présents à la surface du support. Ces composés peuvent également être des oligomères, voire des polymères.

Selon un mode de réalisation avantageux, les composés permettant l'activation des capsules fonctionnalisées et/ou du support, présentent deux, trois ou même plusieurs groupes réactifs avec les groupements présents sur le support et/ou les capsules respectivement. Ainsi, par exemple, à l'issue de l'étape d'activation des capsules, celles-ci présentent ainsi un nombre de groupements réactifs avec le support égal à deux fois, trois fois, ou plus, le nombre de groupements réactifs normalement observé avec un composé d'activation ne possédant qu'un seul groupement réactif avec ledit support.

À titre d'exemple et de manière non limitative, le composé organique (groupe d'activation), capable de former une liaison de covalence entre la surface de la capsule fonctionnalisée et le support, peut être choisi parmi ceux présentés dans le tableau suivant :

| ***Groupe d'activation*** | | ***Type de liaison obtenue*** |
|---|---|---|
| Acide α-bromo-acrylique | 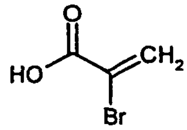 | 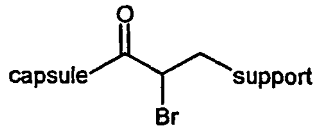 |
| Acide adipique | 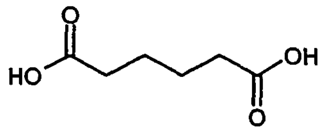 | 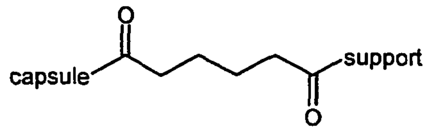 |
| 2,4,6-Trichlorotriazine | 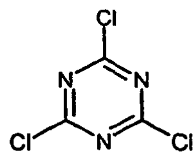 | 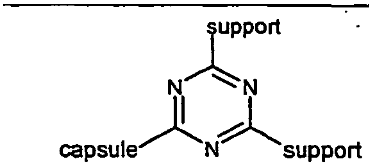 |
| Dichloroquinoxaline | 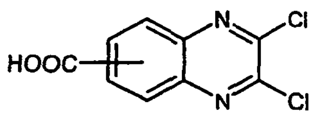 | 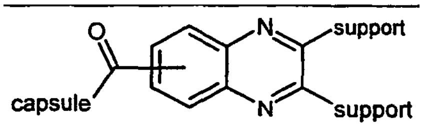 |

D'autres groupes (ou composés) d'activation qui peuvent être avantageusement utilisés dans le cadre de la présente invention sont par exemple ceux utilisés habituellement dans le domaine des colorants de fibres textiles et sont parfaitement connus de l'homme du métier, spécialisé dans la technique de la coloration des textiles.

Les capsules activées telles que décrites ci-dessus, notamment fonctionnalisées par des groupes amine, en particulier les capsules à membrane polyamide obtenues par polycondensation interfaciale en phase inverse, fonctionnalisées par des groupements amine, et activées à l'aide des composés d'activation définis ci-dessus font partie intégrante de la présente invention.

Un exemple tout particulièrement préféré de capsulé activée est une capsule composite polyamide creuse ou pleine, contenant éventuellement au moins un principe actif, fonctionnalisée par des groupements amine ($-NH_2$), et activée pour présenter des groupements chlorés (-Cl). La Figure 3 fournit une représentation schématique de la capsule ainsi définie, où R et R' représentent les résidus des composés de fonctionnalisation et d'activation, respectivement, représentés ci-dessous, et n représente un entier égal à 1, 2 ou 3 :

| $H_2N-R-NH_2$ | $Cl-R'-(Cl)_n$ |
|---|---|
| **Composé de fonctionnalisation** | **Composé d'activation** |

Parmi les capsules fonctionnalisées et activées définies ci-dessus et représentées sur la Figure 3, on préfère celles pour lesquelles le composé de fonctionnalisation est choisi parmi l'éthylènediamine, la di-éthylènetriamine, la tri-éthylènetétramine, la tétra-éthylènepentamine, la tris-amino-éthylamine, les poly(éthylène)imines linéaires, les poly (éthylène)imines branchées et les poly(oxyalkylène)amines, de préférence encore parmi l'éthylènediamine, la di-éthylènetriamine, la tri-éthylènetétramine et les poly(oxyalkylène)amines, en particulier celles connues sous le nom commercial Jeffamine® distribuée par la société Hunstman, de manière tout à fait préférée celles des séries ED, EDR, D et T, et notamment la Jeffamine® EDR-148, la Jeffamine® D-230 ou encore la Jeffamine® T-403.

Parmi les capsules fonctionnalisées et activées définies ci-dessus et représentées sur la Figure 3, on préfère celles pour lesquelles le composé d'activation est choisi parmi l'acide α-bromo-acrylique, l'acide adipique, la. 2,4,6-trichlorotriazine et la dichloroquinoxaline, de préférence la 2,4,6-trichlorotriazine.

Une capsule composite polyamide particulièrement préférée est celle représentée schématiquement sur la Figure 4, fonctionnalisée avec la Jeffamine® EDR-148, et activée avec la 2,4,6-trichlorotriazine. Cette capsule est notamment tout à fait adaptée pour le greffage sur des fibres de coton, en raison d'une part de son caractère hydrophile (apportée par la Jeffamine®) substantiellement identique à celui de la fibre de coton, et d'autre part en raison de ses groupements réactifs chlorés (2 atomes de chlore pour une Jeffamine®) permettant la formation d'une liaison de covalence par réaction avec les fonctions hydroxyle de la fibre de coton (cellulose), réaction totale, irréversible et de cinétique relativement rapide.

Cette réaction de formation de la liaison de covalence entre la capsule fonctionnalisée et activée et le support, en particulier la fibre, correspond au greffage proprement dit de la capsule sur le support, en particulier la fibre.

Comme indiqué précédemment, avant d'effectuer ledit greffage, il peut s'avérer nécessaire de procéder à un prétraitement du support, notamment dans le cas où les groupements réactifs ne sont pas directement accessibles et/ou sont sous forme protégée à la surface dudit support. Ce prétraitement consiste généralement à "révéler" les groupements réactifs présents sur le support, ou, en cas d'absence ou d'insuffisance de tels groupements réactifs, à les faire apparaître, à les créer, par un ou plusieurs traitements chimiques, physiques ou physico-chimiques.

Les prétraitements des supports sont bien connus de l'homme du métier et consistent, à titre d'exemples non limitatifs, en des traitements plasma, ou de type corona et autres. Dans le cas des fibres naturelles, synthétiques ou artificielles, en particulier dans le cas des fibres textiles, ces traitements sont généralement similaires, voire identiques aux prétraitements effectués dans le domaine de la coloration et de la teinture des textiles.

On pourra ainsi se référer aux ouvrages traitant de la coloration des textiles pour les détails sur les prétraitements. Ainsi, lorsque le support le support est une fibre textile, celui-ci peut être est soumis à un ou plusieurs traitements choisis parmi flambage, désencollage, débouillissage, blanchiment, lavage, carbonisage, battage, désensimage, fixage, et autres.

À titre d'exemple, une fibre de coton est généralement prétraitée avant greffage, le prétraitement consistant en trois opérations : désencollage, débouillissage et blanchiment. Le tableau suivant donne d'autres exemples de prétraitements possibles, et couramment employés dans l'industrie textile, selon la nature des fibres :

| *Fibres* | *Étapes* | *Conditions* |
|---|---|---|
| Coton | Flambage<br>Désencollage<br>Débouillissage<br>Blanchiment | Pyrolyse à 1200°C<br>enzymatique à 60°C ou acide à froid<br>NaOH, 100 g/L, 100°C, 20 min.<br>NAClO, $H_2O_2$ |
| Laine | Flambage<br>Lavage<br>Carbonisage<br>Blanchiment<br>Battage<br>(Anti-feutrage) | 1200°C<br>$Na_2CO_3$, pH = 10-11<br>$H_2SO_4$, vaporisage à 100 - 140°C, 100°C<br>$H_2O_2$<br>procédé mécanique<br>NaClO, pH = 6-7, T < 10°C |
| Synthétique | Désencollage<br>Désensimage<br>Fixage | Eau, détergents à chaud<br>idem<br>eau (120°C) ou air chaud (190°C), 10 - 30 s |

Bien entendu, d'autres prétraitements sont encore possibles, notamment lorsqu'ils sont destinés à révéler les groupements réactifs à la surface du support ou encore à améliorer leur disponibilité vis-à-vis des groupements réactifs du composé d'activation choisi. Les groupements réactifs présents à la surface du support peuvent être de tout type, selon la nature et/ou l'origine du support, qu'il soit naturel, artificiel ou encore synthétique.

À titre d'exemples permettant d'illustrer la nature de ces groupements chimiques réactifs, une fibre de coton est une fibre de cellulose, présentant à sa surface, et après traitement éventuel, des fonctions hydroxyle libres. Une fibre de laine présente quant à elle à sa surface au moins une, plusieurs, voire toutes les fonctions des acides aminés, c'est-à-dire les fonctions acide carboxylique, amine, thiol, phénol, amide, etc.

Des groupements chimiques réactifs sont bien entendu également présents sur les fibres synthétiques, et par exemple, des groupements amine et acide carboxylique, s'agissant de fibres de polyamide, ou encore des groupements alcool et acide carboxylique sur les fibres de polyester. Les fibres de verre présentent également des groupements réactifs, tels que des groupements silanol Si-OH.

Ces groupements chimiques sur les fibres sont ainsi susceptibles de former des liaisons de covalence avec les groupements réactifs présents sur les capsules fonctionnalisées et activées, comme indiqué précédemment, les réactions de création de liaison de covalence possédant avantageusement les caractéristiques décrites plus haut dans cette description.

La réaction de greffage des capsules fonctionnalisées et activées sur un support est donc réalisée de manière classique et bien connue de l'homme du métier, par exemple, dans le cas de fibres textiles, selon un procédé similaire,

voir identique, à celui utilisé pour la teinture des fibres et des textiles, par exemple selon la technique en plein bain, ou encore par foulardage. Comme on le verra plus loin, la réaction de greffage peut être effectuée soit sur les fibres soit directement sur le textile élaboré à partir des fibres, et en règle générale, soit directement sur le support tel qu'il a été défini précédemment, soit sur un produit fini incluant un support tel qu'il a été défini précédemment.

Selon une variante du procédé de greffage de la présente invention, le support, après éventuel(s) pré-traitements peut être activé, par exemple au moyen d'un ou plusieurs groupes d'activation, tels qu'ils ont été définis plus haut pour l'activation des capsules fonctionnalisées. Dans ce cas, la réaction de greffage proprement dite, c'est-à-dire la formation de la liaison de la capsule avec le support est effectuée entre la capsule fonctionnalisée et le support activé.

Il peut être également envisagé d'effectuer la réaction de greffage proprement dite entre une capsule fonctionnalisée et activée et un support lui-même activé. Selon encore une autre variante, il est également possible d'effectuer la réaction de greffage proprement dite entre une capsule non fonctionnalisée et non activée, dont le caractère lipophile/hydrophile aura cependant été préalablement adapté, et un support activé. Cette dernière variante, ne constitue toutefois pas un mode de réalisation préféré de la présente invention.

La Figure 5 est une représentation schématique d'une fibre de coton activée par la 2,4,6-trichlorotriazine apte à être greffée par des capsules fonctionnalisées, avantageusement des capsules présentant majoritairement des fonctions amines libres sur leur surface, et par exemple les capsules fonctionnalisées telles que celles représentées sur la Figure 1 ou la Figure 2.

Les conditions réactionnelles de greffage dépendent du type de support et du type de capsules utilisés. La réaction peut être effectuée en milieu aqueux, hydro-organique ou organique, par exemple dans l'eau ou dans le cyclohexane, dans des zones de pH adaptées.

Il peut également être avantageux de conduire la réaction en présence d'un électrolyte et/ou d'un agent tensioactif, afin de faciliter encore l'affinité entre les capsules et le support, c'est-à-dire de favoriser le contact entre les capsules et le support. Des sels minéraux, tels que par exemple le carbonate de sodium ($Na_2CO_3$) sont par exemple utilisables en tant qu'électrolytes, dans le cas de greffage de capsules polyamide sur des fibres de coton. L'utilisation de tensioactifs, tels que l'Hyperme® 1083 ou encore le Tween® 20 s'est avérée également efficace, notamment pour le greffage de capsules composites polyamide creuses ou pleines, fonctionnalisées par une Jeffamine® et activées par la 2,4,6-trichlorotriazine, sur des fibres de coton.

Un support greffé par liaison de covalence à des capsules composites, fonctionnalisées et activées est un autre objet de la présente invention. En particulier, une fibre de coton greffée par des capsules composites polyamide creuses ou pleines, fonctionnalisées par la Jeffamine® EDR-148 et activées avec la 2,4,6-trichlorotriazine forme un mode de réalisation particulièrement préféré de la présente invention.

En variante, la présente invention concerne également un support activé et greffé par des capsules composites fonctionnalisées et dont le caractère lipophile/hydrophile a été éventuellement préalablement adapté à celui dudit support.

La Figure 6 est une représentation schématique d'une fibre de coton greffée. Cette fibre greffée peut être obtenue soit par greffage de capsules fonctionnalisées telles que représentées à la Figure 2 avec une fibre de coton activée telle que représentée à la Figure 5, ou encore par greffage de capsules fonctionnalisées et activées telles que représentées à la Figure 4 avec une fibre de coton simplement pré-traitée, c'est-à-dire présentant à sa surface des fonctions hydroxy libres.

Les fibres obtenues possèdent ainsi sur leur surface des capsules composites greffées par liaisons covalentes. Ce type de liaison assure ainsi une résistance chimique et mécanique, notamment aux lavages prolongés et répétés.

Ce type de greffage par liaison de covalence permet en outre le travail de la fibre, tel qu'il est pratiqué dans l'industrie textile. Les fibres greffées peuvent être ainsi parallélisées puis tordues entre elles pour former des fils, qui pourront ensuite être assemblés, par tissage ou tricotage, pour former le support à deux dimensions qu'est l'étoffe. Les fibres peuvent également être directement entrecroisées de manière à obtenir les matériaux de type non-tissé.

Selon un schéma classique et bien connu dans le domaine du textile, les étoffes subissent, avant les post-traitements classiques, d'autres étapes d'ennoblissement et notamment de coloration (teinture et/ou impression). L'impression est généralement effectuée grâce à des cylindres rotatifs ou encore par jet d'encre. Quant à la teinture, celle-ci est habituellement réalisée en plein bain ("jigger") ou par foulardage.

À ce sujet, et devant la similitude entre le procédé de coloration classique des textiles et le procédé de greffage des capsules selon la présente invention, il peut être envisagé d'effectuer le greffage des capsules sur les fibres après ou pendant les opérations classiques d'ennoblissement et de confection, c'est-à-dire directement sur les fils ou encore sur l'étoffe, les articles de confection et autres matériaux textiles. Une telle alternative du procédé de greffage de capsules sur fils, sur l'étoffe, sur les articles de confection et autres matériaux textiles à base de fibres est également comprise dans le champ de la présente invention.

Le procédé de greffage de capsules sur les fils ou sur l'étoffe est identique au procédé de greffage des capsules sur les fibres et résulte également en la formation d'une ou plusieurs liaisons covalentes entre les capsules et les fibres qui constituent les fils et/ou l'étoffe. Un des avantages du greffage de capsules sur étoffe réside dans le fait qu'il est possible de greffer des capsules sur des matériaux textiles qui ne sont pas élaborés à partir de fibres. Il est ainsi possible

de greffer des capsules composites selon le procédé de la présente invention sur des matériaux textiles tels que le cuir, naturel, artificiel ou synthétique.

Les étoffes et autres matériaux textiles ainsi greffés par des capsules composites se comportent tout à fait comme des étoffes classiques du domaine textile et à ce titre peuvent ensuite entrer dans la phase de confection. Cette opération consiste à transformer les étoffes et autres matériaux textiles en articles textiles, par exemple articles de confection tels que vêtements, pièces de passementerie, de ganterie, de bonneterie, collants, foulards, mais aussi, tout article à base textile, par exemple couvre-chef, chaussures, capes, et articles en toile (tentés, auvents) ou encore les moquettes, tapis, revêtements muraux, linge de lit, cartouches de masques à gaz, étoffes et textiles militaires, patches, pansements, prothèses tissées, etc.

Les divers supports envisagés dans la présente description, notamment les fibres, fils, étoffes, matériaux textiles et de confection, mais aussi le cuir, le bois, le papier, le verre, les matières plastiques polymères, les revêtements, les peintures, les vernis, et autres, greffés par liaison de covalence à des capsules composites, selon le procédé de la présente invention, trouvent une utilisation tout à fait intéressante dans de très nombreux domaines pour l'élaboration d'articles possédant des propriétés particulièrement intéressantes, en fonction de la nature du support, de la nature chimique du polymère de la capsule et du type de matière active éventuellement présente dans les capsules.

À titre d'exemple, lorsque le support est une fibre textile ou un fil, un tissu, une étoffe, etc, le procédé de la présente invention permet l'élaboration de textiles dits de fonction, c'est-à-dire apportant une fonctionnalité supplémentaire nouvelle auxdits textiles.

Les applications possibles peuvent être tout d'abord liées aux propriétés mécaniques et/ou physico-chimiques des capsules greffées elles-mêmes, c'est-à-dire en l'absence de principe actif encapsulé. De telles capsules creuses ou pleines greffées notamment sur fibrés, fils, étoffes et autres matériaux textiles peuvent ainsi trouver des utilisations particulièrement intéressantes pour l'élaboration de textiles adhésifs, ou anti-adhésifs, anti-dérapants, etc.

D'autres domaines d'application encore sont liés à la nature chimique du polymère de la capsule. En particulier lorsque la capsule est biocompatible (voir demande de brevet n° FR-A-2 837 724), des applications en thérapeutiques humaine ou animale sont envisageables.

En outre, les capsules peuvent également renfermer en leur coeur un ou plusieurs principes actifs, liposolubles ou hydrosolubles pouvant être libérés, de manière immédiate, retardée, libérée ou prolongée, voire également ne pas être libérés et rester à l'intérieur des capsules ; les dites capsules confèrent ainsi aux divers supports sur lesquelles elles sont greffées, des propriétés particulières et spécifiques à grande valeur ajoutée dans divers types de domaines d'application, tels que par exemple les domaines industriel, domestique, médical, paramédical, cosmétique, ainsi que celui de la défense civile et militaire.

Il doit être également compris que les capsules envisagées dans le procédé de la présente invention qui contienent une ou plusieurs substances actives, peuvent être « rechargées ». Par ce terme, on entend que la ou les matières actives présentes à l'origine et qui ont diffusé au dehors de la capsule ou qui ont été éliminées par tout moyen chimique, physique ou physico-chimique, (par exemple par lavage(s)) du support greffé, peuvent être introduites à nouveau à l'intérieur des capsules. Il peut ainsi être envisagé de traiter les supports par trempage, bain, ou pulvérisation de matière active afin de « recharger » lesdites capsules.

Il convient en outre de différencier les supports, tels que les fibres, fils, étoffes et autres matériaux textiles, greffés par des capsules susceptibles de libérer un ou plusieurs principes actifs et ceux greffés par des capsules dont le principe actif produit son action au sein de la capsule sans être libéré.

Dans le premier cas de figure (libération du principe actif), celle-ci peut s'effectuer par rupture mécanique de la membrane (cisaillement), par rupture chimique (digestion, dégradation photochimique) ou encore par diffusion.

Ainsi, selon la nature du principe actif libérable par les capsules, les supports, tels que les fibres, fils, étoffes, articles de confections et autres matériaux textiles comprenant ces fibres greffées, trouvent par exemple une utilisation possible en tant que textiles désinfectants, textiles bactéricides, textiles parfumés, textiles rafraîchissants, hydratants, amincissants, textiles à action dépilatoire, anti-UV, textiles anti-acariens, insecticides, textiles anti-stress, textiles anti-fatigue, textiles contenant des agents anti-dérapants, ou encore des agents adhésifs, textiles contenant des additifs de lavage, par exemple des agents anti-statiques, adoucissants, de blanchiments ou encore des enzymes, etc.

Ces exemples, non limitatifs et donnés à titre purement illustratif, présentent quelques applications possibles. Plus spécifiquement, les fibres greffées selon la présente invention peuvent également être utilisées pour la préparation de fils, étoffes, articles de confection et autres matériaux textiles, utiles dans le domaine médical et dans le domaine paramédical en tant que textiles antalgiques, veinotoniques, vasculoprotecteurs, anti-inflammatoires, etc.

Dans le cas de fibres, fils, étoffes et autres matériaux textiles greffés par des capsules composites à principe actif non libérable, les applications possibles sont également très diverses et variées et comprennent, entre autres leur utilisation en tant que matériaux textiles paramagnétiques, antiseptiques, anti-rejets, anti-coagulants, en ce qui concerne plus particulièrement le domaine paramédical et médical.

Dans le domaine industriel ou de la protection civile et militaire, les applications comprennent par exemple les textiles contre agents chimiques d'attaque susceptibles de fixer des agents polluants, tels que métaux lourds ou éléments

radioactifs.

Il est également envisageable de produire des textiles ininflammables par exemple, par incorporation dans le coeur des capsules greffées des agents retardant à la flamme tels que l'acide méthylphosphonique. D'autres applications peuvent encore être envisagées et sont également comprise dans le cadre de la présente invention.

Il doit être de plus compris que de telles applications peuvent être combinées, soit par mélange de différents principes actifs au sein d'une même capsule, soit par greffage de capsules composites de nature différente sur les fibres, fils, étoffes et matériaux textiles, soit encore par mélanges de fibres différentes entre elles par la nature des capsules qui y sont greffées. La combinaison de deux ou trois des techniques exposées ci-dessus est également possible.

Les supports envisageables dans le procédé de la présente invention peuvent également être des supports composites. De tels supports peuvent par exemple être greffés par des capsules contenant un agent adhésif, afin de renforcer lesdits supports dans le but d'obtenir une meilleure cohésion au cours du vieillissement sous contrainte, par exemple pour le colmatage de micro-fissures du béton, du ciment, des matières plastiques, du bois, et autres.

La présente invention est décrite plus en détail dans les exemples particuliers de réalisation qui suivent. Ces exemples ne présentent qu'un caractère purement illustratif et n'ont aucunement pour but de limiter l'invention de quelque manière que ce soit.

## EXEMPLES

### Synthèse de capsules composites polyamide par polycondensation interfaciale en système inverse.

La synthèse de capsules est réalisée conformément au mode opératoire décrit dans les demandes brevets français n° FR-A-2 837 724 et FR-A-2 838 655, ou encore dans la publication de R. Arshady, J. Microencap., 6(1), (1989), 1-10 et 13-28, avec les conditions particulières suivantes :

Étape a) : *Dispersion*

On introduit, dans un homogénéiseur de type Waring-Blendor, 85 mL de cyclohexane et de l'Hypermer® 1083 à 10 g/L. Sont introduits ensuite 70 mL d'eau, 0.5 M d'hexaméthylènediamine et 1 M d'hydrogénocarbonate de sodium. L'agitation est fixée à 18 000 tr/min pendant 5 minutes.

On transvase ensuite la dispersion dans un bécher de 1 L au sein d'une cuve à ultrasons dans laquelle un fond d'eau et de glace a été introduit.
On réalise la sonification de la dispersion pendant 5 minutes, tout en agitant à 100 tr/min à l'aide d'une pale horizontale en polytétrafluoroéthylène.

Étape b) : *Polycondensation interfaciale (20* % *d'eau,* 80 % *de cyclohexane)*

Début de la réaction au sein de la cuve à ultrasons :

On introduit 200 mL de cyclohexane, de l'Hypermer® 1083 à 10 g/L, 0,15 M de dichlorure de téréphtaloyle (DCT) et 15 % de trichlorure de mésoyle (TCM) (pourcentage en fonctions chlorure d'acide (COCl) du TCM par rapport à la totalité des fonctions COCl apportées par les monomères DCT et TCM), au goutte-à-goutte sur la dispersion, au sein même de la cuve à ultrasons. Le mélange réactionnel est toujours sonifié pendant l'introduction de cette solution, et l'agitation à 100 tr/min dans le bécher est maintenue de façon à assurer une bonne homogénéisation au cours de la synthèse. Cette opération dure une trentaine de minutes.

Poursuite de la réaction dans le réacteur Sovirel

Le milieu réactionnel est transvasé dans un réacteur Sovirel thermostaté à 25°C et l'agitation est fixée à 200 tr/min jusqu'à la fin de la synthèse (24 heures).

*Étape c) : Lavage des capsules*

En fin de réaction, les capsules sont centrifugées à 2500 tr/min pendant 5 min, afin de séparer les capsules du milieu réactionnel. Une première étape de lavage consiste à reprendre le culot par 200 mL de chloroforme contenant de l'Hypermer® 1083 à 10 g/L, à agiter la dispersion ainsi obtenue à 200 tr/min pendant 15 min puis à la centrifuger à 2500 tr/min pendant 5 min.

Dans une deuxième étape, le culot est repris par 500 mL de cyclohexane contenant de l'Hypermer® 1083 à 10 g/L, la dispersion est agitée à 200 tr/min pendant 15 min puis centrifugée à 2500 tr/min pendant 5 min. Cette deuxième

étape de lavage est réitérée trois fois.

Afin de stocker les capsules, le culot est repris par 200 mL de cyclohexane contenant de l'Hypermer® 1083 à 10 g/L et la dispersion est agitée à 200 tr/min pendant 5 min. Les capsules peuvent être conservées dans cette solution.

On obtient des capsules de diamètre d'environ 1 μm dont la membrane est un polymère polyamide et dont le coeur, exempt de principe actif, est rempli d'eau.

**Modification de la membrane**

*Fonctionnalisation de la membrane par greffage d'éthylènediamine*

Les capsules (culot de centrifugation, soit environ 70 mL) sont reprises dans 200 mL d'un mélange cyclohexane et Hypermer® 1083 à 10 g/L. L'ensemble est introduit dans un réacteur Sovirel thermostaté à 25°C puis 70 mL d'un mélange de cyclohexane, d'Hypermer® 1083 à 10 g/L et d'une solution 0,5 M d'éthylènediamine (EDA) sont ajoutés. L'agitation est maintenue à 200 tr/min pendant 1 heure puis la réaction est arrêtée. Le milieu réactionnel est ensuite centrifugé. Les capsules sont ensuite lavées selon le protocole décrit ci-dessus *(étape c) : lavage des capsules).*

D'autres capsules fonctionnalisées ont été ainsi préparées, en remplaçant l'éthylènediamine par la triéthylènetétramine, la tris-amino-éthylamine et la Jeffamine®-EDR 148.

*Activation des capsules fonctionnalisées par greffage de trichlorotriazine*

Les capsules fonctionnalisées obtenues précédemment (culot de centrifugation) sont reprises dans 200 mL d'un mélange de cyclohexane et d'Hypermer® 1083 à 10 g/L.

L'ensemble est introduit dans un réacteur Sovirel thermostaté à 25°C et 70 mL de mélange de cyclohexane, d'Hypermer® 1083 à 10 g/L et d'une solution 0,5 M de 2,4,6-trichlorotriazine sont ajoutés. L'agitation est maintenue à 200 tr/min pendant 45 minutes. Après arrêt de la réaction, le milieu réactionnel est centrifugé et les capsules sont lavées selon le protocole décrit ci-dessus *(étape c) : lavage des capsules).*

On obtient ainsi des capsules à membrane polyamide, obtenue par polycondensation interfaciale en système inverse, sur laquelle sont greffées, par liaison covalente, des molécules de trichlorotriazine.

Ces capsules présentent à leur surface des groupements réactifs chlorés susceptibles de former des liaisons covalentes avec les fonctions hydroxyle de la cellulose de la fibre de coton.

**Prétraitement du coton**

*Étape 1 : Désencollage*

Un échantillon de tissu en coton est placé dans un bécher contenant 600 mL d'eau avec 20% de détergent. La solution est portée à 60° C et agitée pendant une heure. L'échantillon est repris et rincé à l'eau. Étape 2 : *Débouillissage*

L'échantillon de tissu désencollé est repris et plongé dans une solution d'hydroxyde de sodium 2,5 M. La solution est portée à 95°C et agitée pendant une heure. L'échantillon est repris et rincé à l'eau. Étape 3 : *Blanchiment*

L'échantillon de tissu désencollé et débouilli est repris et plongé dans une solution d'hypochlorite de sodium à 48° chlorométriques à 0,5 mL/L. La solution est portée à 60°C et agitée pendant 30 minutes. L'échantillon est repris et rincé à l'eau.

**Greffage des capsules sur l'échantillon de coton**

*Étape 1 : Préparation des capsules*

Le greffage des capsules est effectué selon un procédé similaire à une teinture de fibres de coton, telle que décrite par exemple dans "Basic principles of textile coloration" de A. D. Broadbent, édité par "Society of dyers and colourists", 2001.

Les capsules conservées en phase cyclohexane/Hypermer® 1083 à 10 g/L sont centrifugées à 2500 tr/mn pendant 5 minutes afin de les séparer du milieu organique.

Le culot est récupéré puis dispersé dans 600 mL d'eau à pH 5 (milieu tampon : hydrogénophtalate de potassium et hydroxyde de sodium) contenant du Tween® 20, à 5% (v/v). La dispersion obtenue est agitée pendant 15 mn à 500tr/mn. Le Tween® 20 permet l'élimination du cyclohexane. La dispersion est centrifugée à 2500 tr/min pendant 5 minutes. Ces trois opérations sont réitérées trois fois afin d'éliminer toute trace de cyclohexane.

Le culot est récupéré puis dispersé dans 600 mL d'eau à pH 5. La dispersion est agitée pendant 15 mn à 500 tr/mn. La dispersion est à nouveau centrifugée à 2500 tr/mn pendant 5 mn. Ces trois opérations sont réitérées trois fois

afin d'éliminer toute trace de Tween® 20. Finalement, les microcapsules sont récupérées dans 600 mL d'eau à pH 5.

Étape 2 : *Greffage*

On utilise une machine d'échantillonnage Ahiba® Color de type Nuance TS programmable, équipée de 12 biberons (autoclaves destinées à contenir le bain de greffage) fixés sur un tambour. Cette machine est normalement utilisée pour réaliser des teintures par épuisement en plein bain.

Un volume V (mL) de la dispersion des microcapsules obtenues à l'étape 1 ci-dessus est prélevé et introduit dans un biberon contenant l'échantillon de tissu. Le rapport de masse de tissu ($M_{tissu}$ en g) sur le volume du bain (volume $V_{bain}$ = V prélevé en mL) définit le rapport de bain $R_{bain}$ :

$$R_{bain} = \frac{M_{tissu}\ (g)}{V_{bain}\ (mL)}.$$

Le rapport de bain pour le greffage de cet exemple est fixé à 1 : 15. Du $Na_2CO_3$ à 30 g/L est ajouté, afin de favoriser l'adsorption des microcapsules sur le tissu de coton. La montée en température sur la machine est programmée à raison de 3°C/mn. La température finale de greffage des microcapsules sur les fibres de coton est fixée à 50°C. Le bain est maintenu sous agitation (10 tr/mn) pendant 15 mn à la température fixée.

À la fin de cette étape d'adsorption, le biberon est sorti de la machine. Un ajout d'hydroxyde de sodium (NaOH) est effectué pour augmenter le pH et permettre la réaction chimique entre les groupements réactifs à la surface des capsules (atomes de chlore de la 2,4,6-trichlotriazine) et les groupements hydroxyle des fibres du coton.

Le biberon est remis dans la machine, la température du bain est reportée à 50°C, et le pH est d'environ 10,5-11. La réaction est conduite pendant environ 45 à 90 mn.

En fin de réaction, le tissu est récupéré puis rincé à l'eau jusqu'à neutralisation, c'est-à-dire une valeur de pH en surface du tissu voisine de 7. Cette dernière étape permet également d'éliminer les particules non fixées sur le tissu.

**Contrôle du greffage**

Pour cette opération, la présence de capsules greffées sur les fibres est attestée par suivi visuel sur photographie prise au microscope électronique à balayage.

- La Figure 7 présente des fibres de coton greffées par des capsules composites polyamide préparées par polycondensation interfaciale en système inverse, fonctionnalisées par de l'éthylènediamine, et activées par la 2,4,6-trichlorotriazine.
- La Figure 8 présente des fibres de coton greffées par des capsules composites polyamide préparées par polycondensation interfaciale en système inverse, fonctionnalisées par de la Jeffamine® D-230, une poly(oxyalkylène) amine, et activées par la 2,4,6-trichlorotriazine.

La comparaison des fibres obtenues montre d'une part l'absence d'agglomérats de capsules sur les fibres dans les deux cas de figure. D'autre part, l'utilisation d'une amine de fonctionnalisation à caractère hydrophile permet un meilleur greffage, en terme de nombre de capsules greffées, sur les fibres.

Le procédé de la présente invention permet ainsi de réaliser un greffage de capsules composites creuses ou pleines sur tout type de support, en particulier des fibres, organiques ou inorganiques (verre, carbone, fibre textile naturelle, artificielle ou synthétique), de manière contrôlée et homogène.

En effet, la procédé de greffage permet d'une part de contrôler le taux de greffage sur le support et d'autre part d'obtenir une répartition des capsules sur le support, homogène, ou tout au moins plus homogène qu'avec les procédés de greffage par liaison de covalence connus de l'art antérieur, en particulier pour le greffage de capsules sur des fibres textiles.

**Revendications**

1. Procédé de greffage de capsules composites creuses ou pleines, sur un support, ledit procédé comprenant les étapes de :

   a) préparation éventuelle des capsules pour adaptation du caractère lipophile/hydrophile de la membrane de

la capsule en fonction de la nature du support ;

b) fonctionnalisation de la membrane des capsules ;

c) activation des capsules fonctionnalisées et/ou du support par greffage de groupes réactifs aptes à former des liaisons de covalence avec les groupement réactifs présents à la surface du support et/ou des capsules fonctionnalisées respectivement ;

d) mise en contact des capsules fonctionnalisées et éventuellement activées avec le support éventuellement activé et création de liaisons de covalence entre lesdites capsules ledit support ; et

e) récupération et rinçage du support comportant des capsules composites greffées par liaisons de covalence.

**2.** Procédé selon la revendication 1, dans lequel l'étape c) correspond à une activation des capsules.

**3.** Procédé selon la revendication 1, dans lequel l'étape c) correspond à une activation du support.

**4.** Procédé selon l'une quelconque des revendications précédentes, dans lequel les capsules sont des capsules composites creuses ou pleines, de préférence issues de polycondensation interfaciale, avantageusement en système inverse.

**5.** Procédé selon l'une quelconque des revendications précédentes, dans lequel les capsules sont des capsules polyamide composites creuses ou pleines.

**6.** Procédé selon l'une quelconque des revendications précédentes, dans lequel le support est une fibre.

**7.** Procédé selon l'une quelconque des revendications précédentes, dans lequel le support est une fibre textile.

**8.** Procédé selon l'une quelconque des revendications précédentes, dans lequel le support est une fibre textile de coton.

**9.** Procédé selon l'une quelconque des revendications précédentes, dans lequel le support est une fibre textile de coton présentant des groupements hydroxyle libres en surface.

**10.** Procédé selon l'une quelconque des revendications précédentes, dans lequel l'étape b) de fonctionnalisation est réalisée par greffage de composés de fonctionnalisation, présentant au moins deux groupements réactifs, l'un des groupements permettant une liaison de covalence avec les groupements réactifs présents à la surface des capsules, l'autre groupement réactif restant inchangé dans cette étape et étant susceptible d'être mis en oeuvre dans la formation de la liaison de covalence avec les groupes réactifs d'activation.

**11.** Procédé selon l'une quelconque des revendications précédentes, dans lequel le composé de fonctionnalisation est choisi parmi les diamines, les triamines, les tétramines et les polyamines en général, en particulier les $\alpha,\omega$-diamines, y compris les poly(oxyalkylène)amines.

**12.** Procédé selon l'une quelconque des revendications précédentes, dans lequel le composé de fonctionnalisation est choisi parmi l'éthylènediamine, la di-éthylènetriamine, la tri-éthylènetétramine, la tétra-éthylènepentamine, la tris-amino-éthylamine, les poly(éthylène)imines linéaires, les poly(éthylène)imines branchées et les poly(oxyalkytène) amines, de préférence choisi parmi l'éthylènediamine, la di-éthylènetriamine, et les poly(oxyalkylène)amines de formules :

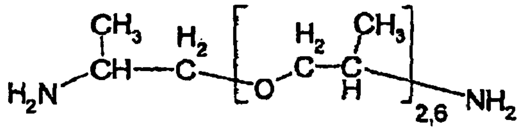
et
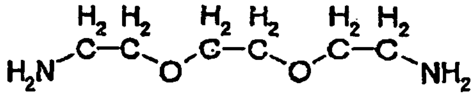
.

**13.** Procédé selon l'une quelconque des revendications précédentes, comprenant les étapes de :

a') adaptation du caractère lipophile/hydrophile de la capsule en fonction de la nature du support, et fonctionnalisation simultanée de ladite surface ;

b') activation des capsules fonctionnalisées et/ou du support par greffage de groupes réactifs aptes à former des liaisons de covalence avec les groupements réactifs présents à la surface du support et/ou des capsules fonctionnalisées respectivement ;

c') mise en contact des capsules éventuellement activées avec le support éventuellement activé et création de liaisons de covalence entre les groupes réactifs desdites capsules et les groupes réactifs dudit support; et
d') récupération et rinçage du support comportant des capsules composites greffées par liaisons de covalence.

**14.** Procédé selon l'une quelconque des revendications précédentes, dans lequel l'étape de fonctionnalisation est effectuée par modification du pH et/ou par greffage de composés présentant au moins deux groupements réactifs, l'un des groupements permettant une liaison de covalence avec les groupements réactifs présents à la surface des capsules, l'autre groupement réactif restant inchangé dans cette étape et étant susceptible d'être mis en oeuvre dans la formation de la liaison de covalence avec le support, via le groupe d'activation.

**15.** Procédé selon l'une quelconque des revendications précédentes, dans lequel l'étape d'activation consiste à remplacer et/ou modifier par traitement chimique, physique ou physico-chimique, la surface des capsules, les groupements fonctionnalisés en groupements réactifs aptes à former des liaisons de covalence avec les groupements réactifs présents sur le support.

**16.** Procédé selon l'une quelconque des revendications précédentes, dans lequel l'étape d'activation correspond au greffage d'un composé d'activation, avantageusement choisi parmi l'acide α-bromo-acrylique, l'acide adipique, la 2,4,6-trichlorotriazine et la dichloroquinoxaline, de préférence la 2,4,6-trichlorotriazine.

**17.** Procédé selon l'une quelconque des revendications précédentes, dans lequel, préalablement au greffage par les capsules, le support est soumis à un ou plusieurs traitements chimiques, physiques ou physico-chimiques.

**18.** Procédé selon l'une quelconque des revendications précédentes, dans lequel, préalablement au greffage par les capsules, le support est soumis à un ou plusieurs traitements choisis parmi traitement plasma, traitement corona, et autres.

**19.** Procédé selon l'une quelconque des revendications 1 à 14, dans lequel, préalablement au greffage par les capsules, lorsque le support est une fibre textile, celui-ci est soumis à un ou plusieurs prétraitements choisis parmi flambage, désencollage, débouillissage, blanchiment, lavage, carbonisage, battage, désensimage, fixage, et autres.

**20.** Procédé selon l'une quelconque des revendications précédentes, dans lequel l'étape de greffage des capsules sur le support est effectuée en présence d'un sel minéral.

**21.** Procédé selon l'une quelconque des revendications précédentes, dans lequel la réaction de greffage entre le support et les capsules est une réaction entre des groupements acide carboxylique et hydroxy, halogénure d'acyle et amine, halogénure et hydroxy, isocyanate et amine ou isocyanate et hydroxy, de préférence entre des groupements halogénure et hydroxy.

**22.** Procédé selon l'une quelconque des revendications précédentes, dans lequel le greffage des capsules est effectué directement sur des fils, une étoffe, des articles de confection et autres matériaux textiles.

**23.** Capsule composite polyamide, de préférence obtenue par polycondensation interfaciale en système inverse, fonctionnalisée par des groupements amine, lesdits groupements amine provenant d'un composé de fonctionnalisation choisi parmi l'éthylènediamine, la di-éthylènetriamine, et les poly(oxyalkylène)amines de formules :

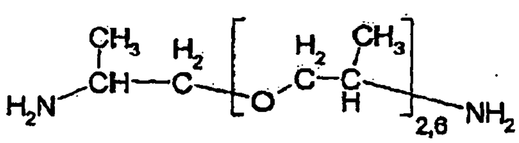 et 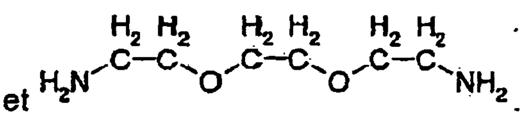

**24.** Capsule composite polyamide, de préférence obtenue par polycondensation interfaciale en système inverse, fonctionnalisée par la diamine suivante :

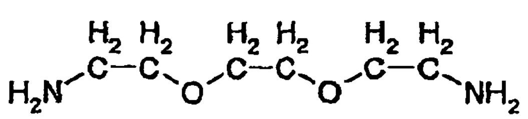

**25.** Capsule composite polyamide, de préférence obtenue par polycondensation interfaciale en système inverse, activée par greffage d'un composé d'activation choisi parmi l'acide α-bromo-acrylique, l'acide adipique, la 2,4,6-trichlorotriazine et la dichloroquinoxaline, de préférence la 2,4,6-trichlorotriazine.

**26.** Capsule selon la revendication 25, fonctionnalisée par la diamine suivante :

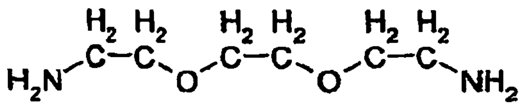

et activée par la 2,4,6-trichlorotriazine.

**27.** Support greffé par liaison de covalence à au moins une capsule composite selon l'une quelconque des revendications 23 à 26.

**28.** Support selon la revendication 27 qui est un support organique, inorganique, naturel, artificiel ou synthétique, choisi parmi revêtement, peinture, verni, film, feuille, plaque, cuir, pierre et fibre.

**29.** Fibre, de préférence fibre de coton, greffée par au moins une capsule de l'une quelconque des revendications 23 à 26.

**30.** Utilisation d'un support selon l'une quelconque des revendications 27-28 pour l'élaboration d'un article de fonction, dans laquelle le support est une fibre, un fil, une étoffe, un matériau textile ou de confection, pour l'élaboration de textiles de fonction.

**31.** Article comprenant des capsules selon l'une quelconque des revendication 23 à 26 greffées par liaisons de covalence sur un support selon le procédé de l'une quelconque des revendications 1 à 22.

**32.** Article selon la revendication 31 qui est un article textile.

## Claims

**1.** A Method for grafting hollow or solid composite capsules onto a support, said method comprising the following steps:

a) optionally preparing the capsules so as to adapt the lipophilic/hydrophilic character of the capsule membrane depending on the nature of the support;
b) functionalising the membrane of the capsules;
c) activating the functionalised capsules and/or the support by grafting reactive groups able to form covalent bonds with the reactive groups present at the surface of the support and/or the functionalised capsules respectively;
d) contacting the functionalised and optionally activated capsules with the optionally activated support and creating covalent bonds between said capsules and said support; and
e) recovering and rinsing the support comprising composite capsules grafted by covalent bonding.

**2.** Method according to claim 1, wherein step c) corresponds to activating the capsules.

**3.** Method according to claim 1, wherein step c) corresponds to activating the support.

**4.** Method according to any one of the preceding claims, wherein the capsules are hollow or solid composite capsules preferably produced by interfacial polycondensation, advantageously in a reverse phase.

**5.** Method according to any one of the preceding claims, wherein the capsules are hollow or solid polyamide composite capsules.

**6.** Method according to any one of the preceding claims, wherein the support is a fibre.

**7.** Method according to any one of the preceding claims, therein the support is a textile fibre.

**8.** Method according to any one of the preceding claims, wherein the support is a cotton textile fibre.

**9.** Method according to any one of the preceding claims, wherein the support is a cotton textile fibre having free hydroxyl groups at the surface.

**10.** Method according to any one of the preceding claims, wherein the functionalisation step b) is carried out by grafting functionalisation compounds having at least two reactive groups, one of the groups enabling a covalent bond with the reactive groups present at the surface of the capsules, the other reactive group remaining unchanged during this step and being able to be used in the formation of the covalent bond with the reactive activation groups.

**11.** Method according to any one of the preceding claims, wherein the functionalisation compound is selected from diamines, triamines, tetraamines and polyamines in general, in particular the α,ω-diamines, including the poly(oxyalkylene)amines.

**12.** Method according to any one of the preceding claims, wherein the functionalisation compound is selected from ethylenediamine, diethylenetriamine, triethylenetetraamine, tetraethylenepentamine, tris-amino-ethyl amine, linear poly(ethylene)imites, branched poly(ethylene)imines and poly(oxyalkylene)amines, preferably from ethylenediamine, diethylenetriamine and poly(oxyalkylene)amines of formulae:

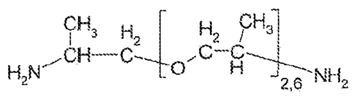
and
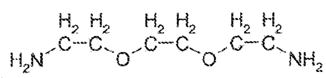

**13.** Method according to any one of the preceding claims, comprising the following steps:

a') adapting the lipophilic/hydrophilic character of the capsule depending on the nature of the support and simultaneously functionalising said surface;
b') activating functionalised capsules and/or the support by grafting reactive groups able to form covalent bonds with the reactive groups present at the surface of the support and/or the functionalised capsules respectively;
c') contacting optionally activated capsules with the optionally activated support and creating covalent bonds between the reactive groups of said capsules and the reactive groups of said support; and
d') recovering and rinsing the support comprising composite capsules grafted by covalent bonding.

**14.** Method according to any one of the preceding claims, wherein the functionalisation step is carried out by modifying the pH and/or by grafting compounds having at least two reactive groups, one of the groups enabling a covalent bond with the reactive groups present at the surface of the capsules, the other reactive group remaining unchanged during this steep and being able to be used in the formation of the covalent bond with the support via the activation group.

**15.** Method according to any one of the preceding claims, wherein the activation step consists of replacing and/or modifying by chemical, physical or physicochemical treatment the surface of the capsules, the groups functionalised into reactive groups being able to form covalent bonds with the reactive groups present on the support.

**16.** Method according to any one of the preceding claims, wherein the activation step corresponds to grafting an activation compound, advantageously selected from α-bromo-acrylic acid, adipic acid, 2,4,6-trichlorotriazine and dichloroquinoxaline, preferably 2,4,6-trichlorotriazine.

**17.** Method according to any one of the preceding claims, wherein, prior to grafting by the capsules, the support is subjected to one or more chemical, physical or physicochemical treatments.

**18.** Method according to any one of the preceding claims, wherein, prior to grafting by the capsules, the support is subjected to one or more treatments selected from plasma treatment, corona treatment and others.

**19.** Method according to any one of claims I to 14, wherein, prior to grafting by the capsules, if the support is a textile fibre it is subjected to one or more pre-treatments selected from singeing, desizing, boiling off, bleaching, washing, carbonising, beating, scouring, fixing and others.

**20.** Method according to any one of the preceding claims, wherein the step of grafting the capsules onto the support is carried out in the presence of an inorganic salt.

**21.** Method according to any one of the preceding claims, wherein the grafting reaction between the support and the capsules is a reaction between carboxylic acid and hydroxy groups, acyl halide and amine groups, halide and hydroxy groups, isocyanate and amine groups or isocyanate and hydroxy groups, preferably between halide and hydroxy groups.

**22.** Method according to any one of the preceding claims, wherein the capsules are grafted directly onto threads, a fabric, ready-made articles and other textile materials.

**23.** A polyamide composite capsule, preferably obtained by interfacial polycondensation in a reverse phase, functionalised by amine groups, said amine groups originating from a functionalisation compomd selected from ethylenediamine, diethylenetriamine and poly(oxyalkylene)amines of formulae:

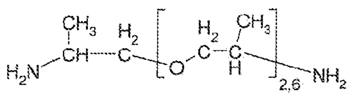 and 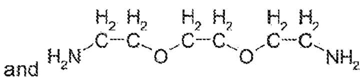

**24.** A polyamide composite capsule, preferably obtained by interfacial polycondensation in a reverse phase, functionalised by the following diamine:

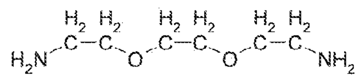

**25.** A polyamide composite capsule, preferably obtained by interfacial polycondensation in a reverse phase, activated by grafting an activation compound selected from α-bromo-acrylic acid, adipic acid, 2,4,6-trichlorotriazine and dichloroquinoxaline, preferably 2,4,6-trichlorotriazine.

**26.** Capsule according to claim 25, functionalised by the following diamine:

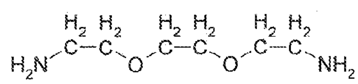

and activated by 2,4,6-trichlorotriazine.

**27.** A support grafted by way of covalent bonding to at least one composite capsule according to any one of claims 23 to 26.

**28.** Support according to claim 27 which is an organic, inorganic, natural, artificial or synthetic support selected from coating, paint, varnish, film, sheet, plate, leather, stone and fibre.

**29.** Fibre, preferably cotton fibre, grafted by at least one capsule of any one of claims 23 to 26.

**30.** Use of a support according to any one of claims 27 or 28 for producing a functional article, wherein the support is a fibre, a thread, a fabric, a textile material or a ready-made article, for producing functional textiles.

**31.** An article comprising capsules according to any of claims 23 to 26 grafted, by covalent bonding, to a support as obtained by the method of any one of claims 1 to 22.

**32.** Article according to claim 31 which is a textile article,

**Patentansprüche**

**1.** Verfahren zum Aufpfropfen von hohlen oder gefüllten Verbundkapseln auf einen Träger, wobei das Verfahren die

Schritte umfasst:

a) optionales Vorbereiten der Kapseln zum Anpassen des lipophilen/hydrophilen Charakters der Membran der Kapsel in Abhängigkeit von der Art des Trägers,
b) Funktionalisieren der Membran der Kapseln,
c) Aktivieren der funktionalisierten Kapseln und/oder des Trägers durch Pfropfen von reaktiven Gruppen, die in der Lage sind, kovalente Bindungen mit den reaktiven Gruppen zu bilden, die sich an der Oberfläche des Trägers und/oder der jeweils funktionalisierten Kapseln befinden,
d) In-Kontakt-Bringen der funktionalisierten und optional aktivierten Kapseln mit dem optional aktivierten Träger und Bilden von kovalenten Bindungen zwischen den Kapseln und dem Träger, und
e) Rückgewinnen und Spülen des Trägers, der durch kovalente Bindungen gepfropfte Verbundkapseln umfasst.

**2.** Verfahren gemäß Anspruch 1, wobei der Schritt c) einer Aktivierung der Kapseln entspricht.

**3.** Verfahren gemäß Anspruch 1, wobei der Schritt c) einer Aktivierung des Trägers entspricht.

**4.** Verfahren gemäß einem der vorhergehenden Ansprüche, wobei die Kapseln hohle oder gefüllte Verbundkapseln sind, die vorzugsweise aus einer Grenzflächenpolykondensation vorteilhafterweise in einem inversen System stammen.

**5.** Verfahren gemäß einem der vorhergehenden Ansprüche, wobei die Kapseln hohle oder gefüllte Verbund-Polyamidkapseln sind.

**6.** Verfahren gemäß einem der vorhergehenden Ansprüche, wobei der Träger eine Faser ist.

**7.** Verfahren gemäß einem der vorhergehenden Ansprüche, wobei der Träger eine Textilfaser ist.

**8.** Verfahren gemäß einem der vorhergehenden Ansprüche, wobei der Träger eine Baumwoll-Textilfaser ist.

**9.** Verfahren gemäß einem der vorhergehenden Ansprüche, wobei der Träger eine Baumwoll-Textilfaser ist, die an der Oberfläche freie Hydroxylgruppen besitzt.

**10.** Verfahren gemäß einem der vorhergehenden Ansprüche, wobei der Schritt b) des Funktionalisierens durch Pfropfen von Funktionalisierungsverbindungen realisiert wird, die mindestens zwei reaktive Gruppen umfassen, wobei die eine der Gruppen eine kovalente Bindung mit den reaktiven Gruppen ermöglicht, die sich an der Oberfläche der Kapseln befinden, und die andere reaktive Gruppe in diesem Schritt unverändert bleibt und geeignet ist, bei der Bildung der kovalenten Bindung mit den reaktiven Aktivierungsgruppen verwendet zu werden.

**11.** Verfahren gemäß einem der vorhergehenden Ansprüche, wobei die Funktionalisierungsverbindung allgemein aus Diaminen, Triaminen, Tetraminen und Polyaminen und insbesondere aus $\alpha,\omega$-Diaminen, einschließlien Poly(oxyalkylen)aminen ausgewählt wird.

**12.** Verfahren gemäß einem der vorergehenden Ansprüche, wobei die Funktionalisieruugsverbindung aus Ethylendiamin, Diethylentriamin, Triethylentetramin, Tetraethylenpentamin, Trisaminoethylamin, linearen Poly(ethylen)iminen, verzweigten Poly(ethylen)iminen und Poly(oxyalkylen)aminen ausgewählt wird, vorzugsweise aus Ethylendiamin, Diethylentriamin und den Poly(oxyalkylen)aminen der Formeln:

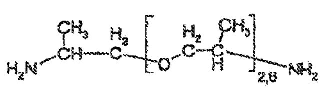

und

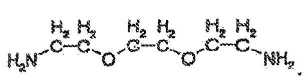

ausgewählt wird.

**13.** Verfahren gemäß einem der vorhergehenden Ansprüche, umfassend die Schritte:

a') Anpassen des lipophilen/hydrophilen Charakters der Kapsel in Abhängigkeit von der Art des Trägers und gleichzeitiges Funktionalisieren der Oberfläche,
b') Aktivieren der funktionalisierten Kapseln und/oder des Trägers durch Pfropfen von reaktiven Gruppen, die in der Lage sind, kovalente Bindungen mit reaktiven Gruppen zu bilden, die sich an der Oberfläche des Trägers und/oder der jeweils funktionalisierten Kapseln befinden,
c') In-Kontakt-Bringen der optional aktivierten Kapseln mit dem optional aktivierten Träger und Bilden von kovalenten Bindungen zwischen den reaktiven Gruppen der Kapseln und den reaktiven Gruppen des Trägers, und
d') Rückgewinnen und Spülen des Trägers, der durch kovalente Bindungen gepfropfte Verbundkapseln umfasst.

**14.** Verfahren gemäß einem der vorhergehenden Ansprüche, wobei der Schritt des Funktionalisierens durch Verändern des pH-Wertes und/oder durch Pfropfen von Verbindungen durchgeführt wird, die mindestens zwei reaktive Gruppen umfassen, wobei die eine der Gruppen eine kovalente Bindung mit den reaktiven Gruppen ermöglicht, die sich an der Oberfläche der Kapseln befinden, und die andere Gruppe in diesem Schritt unverändert bleibt und geeignet ist, bei der Bindung der kovalenten Bindung mit dem Träger über die Aktivierungsgruppe verwendet zu werden.

**15.** Verfahren gemäß einem der vorhergehenden Ansprüche, wobei der Aktivierungsschritt darin besteht, die Oberfläche der Kapseln durch chemische, physikalische oder physikalischchemische Behandlung zu ersetzen und/oder zu verändern, wobei die in reaktive Gruppen funktionalisierten Gruppen in der Lage sind, mit den sich auf dem Träger befindenden reaktiven Gruppen kovalente Bindungen zu bilden.

**16.** Verfahren gemäß einem der vorhergehenden Ansprüche, wobei der Schritt des Aktivierens dem Pfropfen einer Aktivierungsverbindung entspricht, die vorzugsweise aus $\alpha$-Bromacrylsäure, Adipinsäure, 2,4,6-Trichlortriazin und Dichlorchinoxalin, vorzugweise 2,4,6-Trichlortriazin ausgewählt ist.

**17.** Verfahren gemäß einem der vorhergehenden Ansprüche, wobei der Träger vor dem Pfropfen durch die Kapseln einer oder mehreren chemischen, physikalischen oder physikalischchemische Behandlungen unterzogen wird.

**18.** Verfahren gemäß einem der vorhergehenden Ansprüche, wobei der Träger vor dem Pfropfen durch die Kapseln einer oder mehreren Behandlungen unterzogen wird, die aus einer Plasmabehandlung, einer Coronabehandlung und dergleichen ausgewählt sind.

**19.** Verfahren gemäß einem der Ansprüche 1 bis 14, wobei, wenn der Träger eine Textilfaser ist, dieser vor dem Pfropfen durch die Kapseln einer oder mehreren Vorbehandlungen unterzogen wird, die aus einem Absengen, Entschlichten, Abkorchen, Bleichen, Waschen, Karbonisieren, Ausklopfen, Entfetten, Fixieren und dergleichen ausgewählt sind.

**20.** Verfahren gemäß einem der vorhergehenden Ansprüche, wobei der Schritt des Pfropfens der Kapseln auf den Träger in Anwesenheit eines Mineralsalzes durchgeführt wird.

**21.** Verfahren gemäß einem der vorhergehenden Ansprüche, wobei die Reaktion des Pfropfens zwischen dem Träger und den Kapseln eine Reaktion zwischen Hydroxy- und Carbonsäuregruppen, Acylhalogenid- und Amingruppen, Halogenid- und Hydroxygruppen, Isocyanat- und Amin- oder Isocynat- und Hydroxygruppen, vorzugsweise zwischen Halogenid- und Hydroxylgruppen ist.

**22.** Verfahren gemäß einem der vorhergehenden Ansprüche, wobei das Pfropfen der Kapseln direkt an Fäden, einem Stoff, Konfektionsartikeln und anderen Textilmaterialien erfolgt.

**23.** Polyamid-Verbundkapsel, die vorzugsweise durch Grenzflächenpolykondensation in einem inversen System erhalten wird, die durch Amingruppen funktionalisiert wird, wobei die Amingruppen aus einer Funktionalisierungsverbindung stammen, die aus Ethylendiamin, Diethylentriamin und den Poly(oxyalkylen)aminen der Formeln:

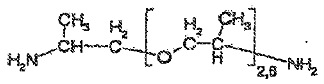

und

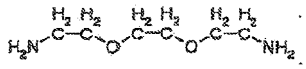

ausgewählt ist.

**24.** Polyamid-Verbundkapsel, die vorzugsweise durch Grenzflächenpolykondensation in einem inversen System erhalten wird, die durch das folgende Diamin funktionalisiert wird:

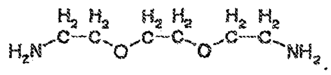

**25.** Polyamid-Verbundkapsel, die vorzugsweise durch Grenzflächenpolykondensation in einem inversen System erhalten wird, die durch Pfropfen einer Aktivierungsverbindung aktiviert wird, die aus α-Bromacrylsäure, Adipinsäure, 2,4,6-Trichlortriazin und Dichlorchinoxalin, vorzugsweise 2,4,6-Trichlortriazin ausgewählt ist.

**26.** Kapsel gemäß Anspruch 25, die durch das folgende Diamin:

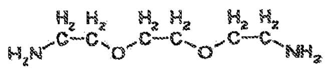

funktionalisiert und durch 2,4,6-Trichlortriazin aktiviert wird.

**27.** Träger, der durch eine kovalente Bindung auf mindestens eine Verbundkapsel gemäß einem der Ansprüche 23 bis 26 gepfropft wird.

**28.** Träger gemäß Anspruch 27, der ein organischer, anorganischer, natürlicher, künstlicher oder synthetischer Träger ist, der aus einer Beschichtung, Farbe, Lack, Film, Folie, Platte, Leder, Stein und Faser ausgewählt ist.

**29.** Faser, vorzugsweise Baumwollfaser, die durch mindestens eine Kapsel aus einem der Ansprüche 23 bis 26 gepfropft wird.

**30.** Verwendung eines Trägers gemäß einem der Ansprüche 27 bis 28 zum Herstellen eines Funktionsartikels, wobei der Träger eine Faser, ein Faden, ein Stoff, ein Textil- oder ein Konfektionsmaterial ist, zum Herstellen von Funktionstextilien,

**31.** Artikel, umfassend Kapseln gemäß einem der Ansprüche 23 bis 26, die durch kovalente Bindungen gemäß dem Verfahren gemäß einem der Ansprüche 1 bis 22 auf einen Träger aufgepfropft werden.

**32.** Artikel gemäß Anspruch 31, der ein Textilartikel ist.

**Figure 1**

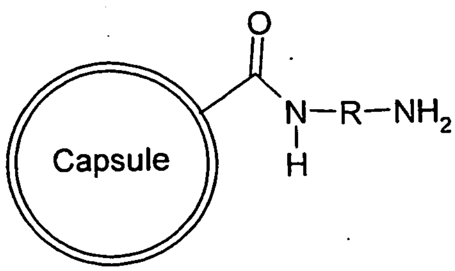

**Figure 2**

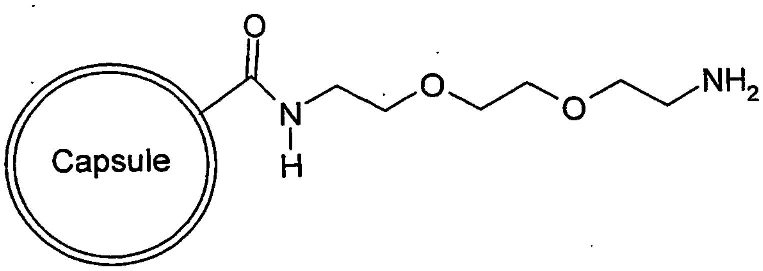

**Figure 3**

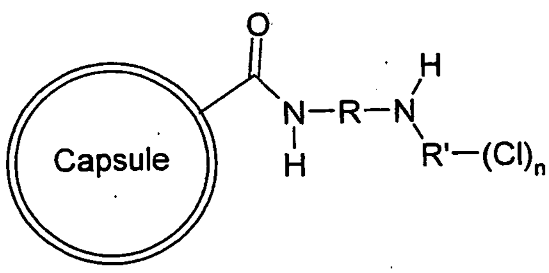

**Figure 4**

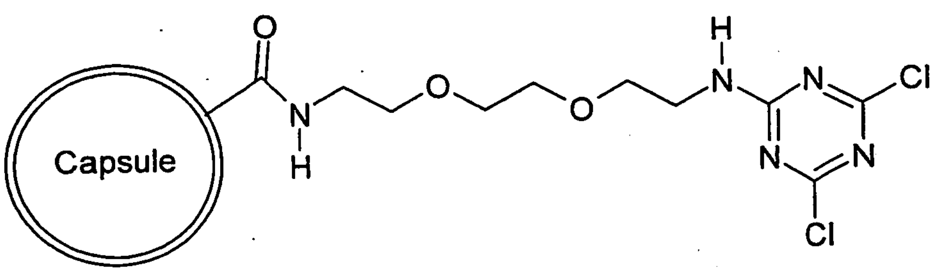

**Figure 5**

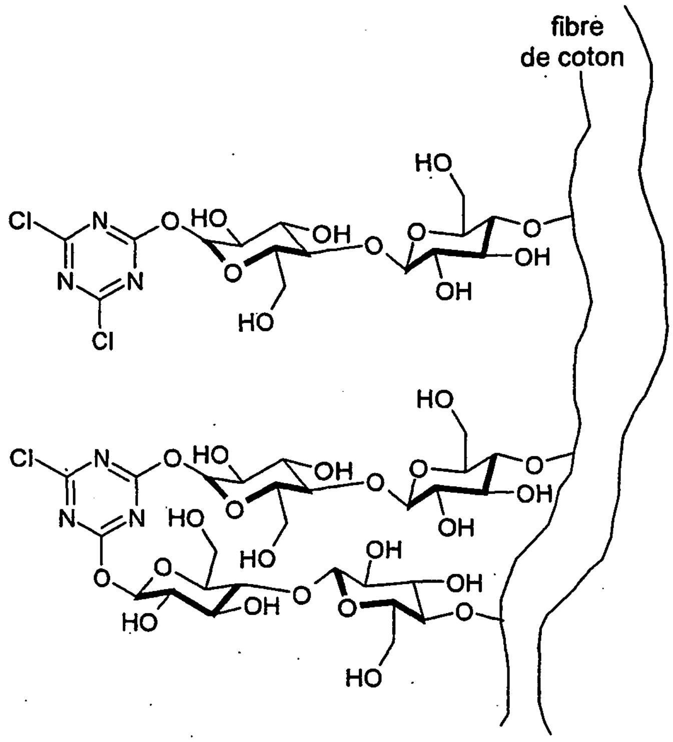


**Figure 6**

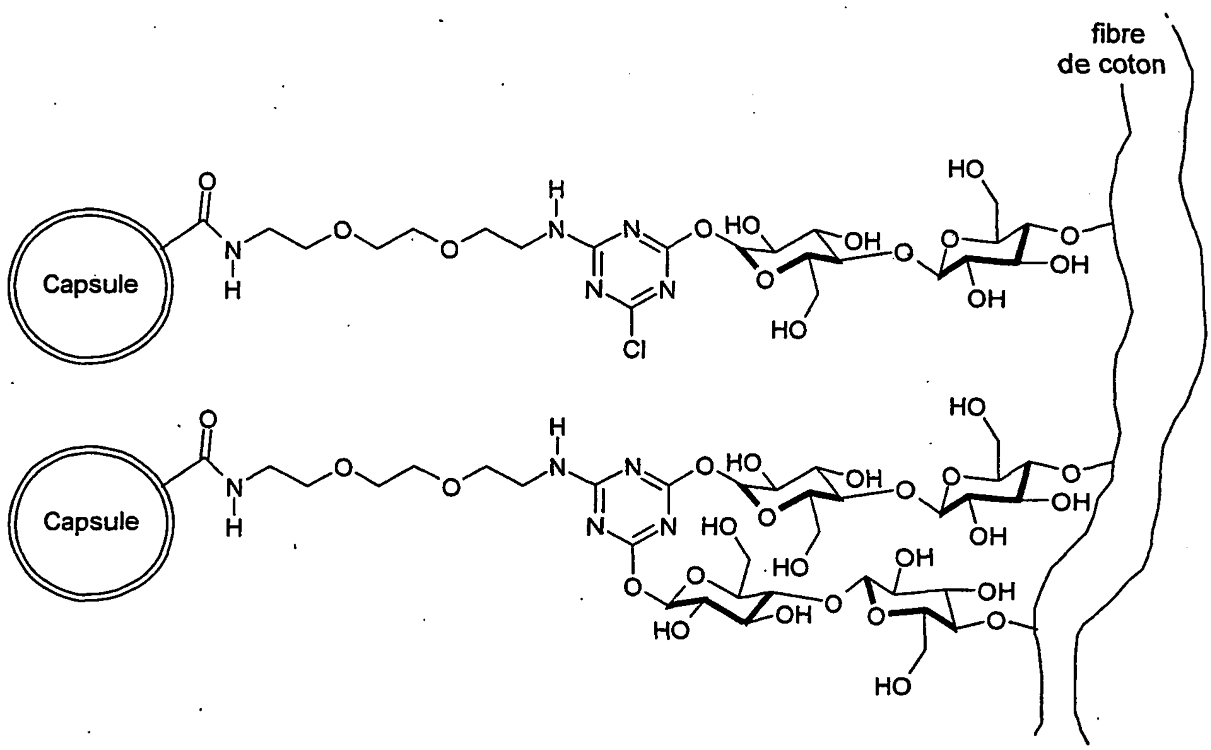

**Figure 7**

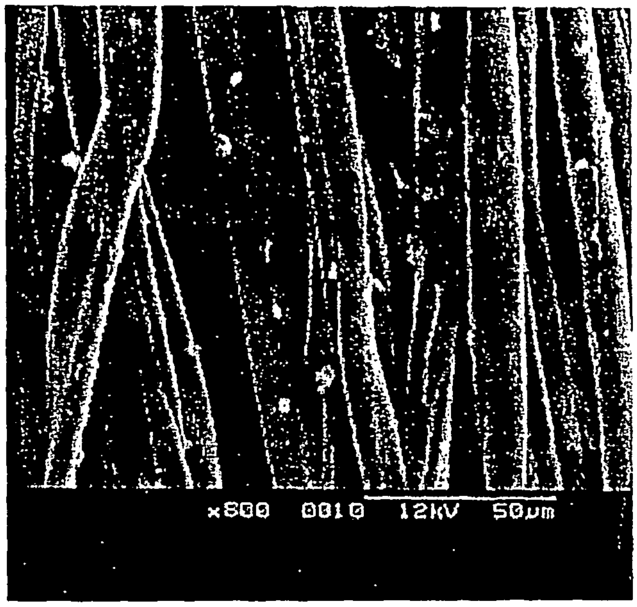


**Figure 8**

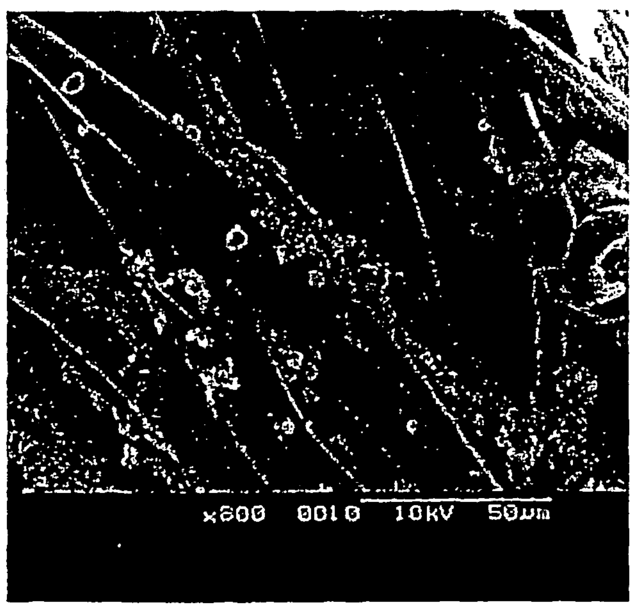

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0106054 A
- FR 2837724 A
- FR 2838655 A


### Littérature non-brevet citée dans la description


- **J. March.** Advanced Organic Chemistry. 3-9
- **R. Arshady.** *J. Microencap.,* 1989, vol. 6 (1), 1-1013-28
- **A. D. Broadbent.** Basic principles of textile coloration. 2001